# FASCICULE DE BREVET EUROPEEN

(11) **EP 4 343 072 B1**
(45) Date de publication et mention de la délivrance du brevet: **29.01.2025**
(21) Numéro de dépôt: 23195871.1
(22) Date de dépôt: 07.09.2023
(51) Int. Cl.: E04D 1/30, E04D 1/04, F24S 20/67, F24S 25/613, H02S 20/23, H02S 20/25

(54) **SYSTÈME DE FIXATION CONFIGURÉ POUR FIXER AU MOINS UN PANNEAU PHOTOVOLTAÏQUE SUR UNE TOITURE**
BEFESTIGUNGSSYSTEM ZUR BEFESTIGUNG MINDESTENS EINER PHOTOVOLTAIKTAFEL AN EINEM DACH
ATTACHMENT SYSTEM CONFIGURED TO SECURE AT LEAST ONE PHOTOVOLTAIC PANEL TO A ROOF

(30) Priorité: 26.09.2022 FR 2209730
(43) Date de publication de la demande: 27.03.2024
(73) Titulaire: Edilians, 69570 Dardilly (FR)
(72) Inventeur: MARTINAT, Eric, 01600 Trévoux (FR); POUILLOT, Laurent, 41600 Lamotte Beuvron (FR); DUBOST, Daniel, 69610 Sainte Foy l'Argentière (FR)
(74) Mandataire: Germain Maureau

(56) Documents cités:
- GB-A- 2 454 189
- US-A1- 2020 399 902

## Description

### Domaine technique

La présente invention concerne le domaine des toitures dites en pente réalisées en tuiles à emboitement en terre cuite, mais également en béton, voire en matériau composite et plus particulièrement sur la fixation de panneaux photovoltaïques sur une telle toiture.

### Etat de la technique

Il existe plusieurs façons connues d'équiper une toiture de panneaux photovoltaïques.

Par exemple, selon une première solution, des panneaux photovoltaïques peuvent être implantés en surimposition d'une toiture comportant des tuiles à emboîtement fortement galbées. Cependant, cette solution a un effet préjudiciable sur l'esthétisme global du toit puisque les panneaux photovoltaïques dépassent alors de la toiture. En outre, la fixation des panneaux photovoltaïques peut compromettre l'étanchéité de la toiture, car elle requiert de traverser la couche de tuiles avec des organes de fixation destinés à être fixés à la charpente. De plus, les panneaux photovoltaïques, qui dépassent de la toiture, présentent une importante prise au vent.

Une deuxième solution connue consiste à interrompre la couche de tuiles sur une surface correspondant sensiblement à celle des panneaux photovoltaïques à fixer sur la toiture, à positionner les panneaux photovoltaïques dans la zone interrompue de la couche de tuiles, à fixer les panneaux photovoltaïques à la charpente, et à positionner ensuite des tuiles accessoires sur le pourtour des panneaux photovoltaïques. Une telle solution est notamment décrite dans le document DE102011106212.

Le document DE102011106212 décrit plus particulièrement un ensemble de tuiles accessoires comprenant notamment des tuiles accessoires d'un premier type configurées pour s'étendre le long d'un bord supérieur d'un panneau photovoltaïque et pour coopérer chacune avec une tuile standard appartenant à un rang disposé immédiatement au-dessus du panneau photovoltaïque, des tuiles accessoires d'un deuxième type configurées pour s'étendre le long d'un bord inférieur du panneau photovoltaïque et pour coopérer chacune avec une tuile standard appartenant à un rang disposé immédiatement en dessous du panneau photovoltaïque, et des tuiles accessoires d'un troisième type configurées pour s'étendre le long d'un bord latéral du panneau photovoltaïque et pour coopérer chacune avec une tuile standard adjacente.

Une telle solution permet de réduire sensiblement la hauteur de dépassement des panneaux photovoltaïques par rapport au toit, et donc de limiter l'impact de ces derniers sur l'esthétisme global du toit. De plus, une telle solution limite la prise au vent engendrée par les panneaux photovoltaïques.

Cependant, une telle solution a pour inconvénient majeur de transférer une partie de l'étanchéité de la toiture aux panneaux photovoltaïques, ce qui est susceptible de compromettre l'étanchéité globale de la toiture.

Un autre exemple de système de fixation est connu de US 2020/399902 A1.

### Résumé de l'invention

L'invention a pour but de remédier à tout ou partie des inconvénients précités et notamment à proposer un système de fixation permettant la pose et l'intégration d'un panneau photovoltaïque sur une toiture en garantissant un montage sur le toit qui soit aisé et qui respecte l'esthétique globale du toit et l'étanchéité du toit.

A cet effet, la présente invention concerne un système de fixation configuré pour fixer au moins un panneau photovoltaïque sur une toiture comportant une pluralité de rangs de tuiles à emboîtement standard, les tuiles à emboîtement standard comportant chacune une face externe orientée vers le ciel et une face interne orientée vers une charpente et étant posées sur des rangs de liteaux de la charpente, les tuiles à emboîtement standard comportant chacune au moins un galbe longitudinal dont la section transversale est en forme de U inversé, le système de fixation comprenant :
- des tuiles à emboîtement accessoires aval d'un premier type, chaque tuile à emboîtement accessoire aval comportant :
   - une partie inférieure qui est pourvue d'un bord de pied et qui est configurée pour prendre appui sur un bord de tête d'une tuile à emboîtement standard appartenant à un rang immédiatement inférieur, ladite partie inférieure étant pourvue d'au moins un galbe inférieur dont la section transversale est en forme de U inversé et qui est configuré pour recouvrir partiellement le galbe longitudinal de la tuile à emboîtement standard appartenant au rang immédiatement inférieur, et
   - une partie supérieure qui est pourvue d'un bord de tête et qui présente une hauteur maximale inférieure à 70%, et par exemple inférieure à 60%, de la hauteur maximale du galbe inférieur de chacune des tuiles à emboîtement accessoires aval,
- des tuiles à emboîtement accessoires aplanies d'un deuxième type qui sont différentes des tuiles à emboîtement accessoires aval et des tuiles à emboîtement standard, chaque tuile à emboîtement accessoire aplanie présentant une hauteur maximale inférieure à 70%, et par exemple inférieure à 60%, de la hauteur maximale du galbe inférieur de chacune des tuiles à emboîtement accessoires aval, chaque tuile à emboîtement accessoire aplanie comprenant un bord de pied configuré pour prendre appui sur un bord de tête d'une tuile à emboîtement accessoire aval appartenant à un rang immédiatement inférieur et un bord de tête configuré pour être recouvert aussi bien par un bord de pied d'une tuile à emboîtement accessoire aplanie que par un bord de pied d'une tuile à emboîtement standard appartenant à un rang immédiatement supérieur,
- un rail de support inférieur et un rail de support supérieur configurés pour prendre appui respectivement sur des faces supérieures de deux liteaux appartenant à deux rangs différents, et pour être fixés à la charpente,
- une pluralité d'organes de fixation comprenant un premier ensemble d'organes de fixation configurés pour être fixés au rail de support inférieur et un deuxième ensemble d'organes de fixation configurés pour être fixés au rail de support supérieur, chacun des organes de fixation du premier ensemble étant configuré pour s'étendre entre une tuile à emboîtement accessoire aval respective et une tuile à emboîtement accessoire aplanie respective appartenant à deux rangs successifs et pour faire saille du bord de pied de la tuile à emboîtement accessoire aplanie respective, et chacun des organes de fixation du deuxième ensemble étant configuré pour s'étendre entre deux tuiles à emboîtement accessoires aplanies respectives appartenant à deux rangs successifs et pour faire saille du bord de pied de la tuile à emboîtement accessoire aplanie respective appartenant au rang supérieur desdits deux rangs successifs, et
- un dispositif de support configuré pour être fixé aux organes de fixation des premier et deuxième ensembles et pour être supporté par les organes de fixation des premier et deuxième ensembles, le dispositif de support étant configuré pour s'étendre au-dessus de tuiles à emboîtement accessoires aval et aplanies et pour supporter au moins un panneau photovoltaïque.

Une telle configuration du système de fixation selon la présente invention, et en particulier des tuiles à emboîtement accessoires aval et aplanies, permet d'assurer l'étanchéité de la toiture uniquement par l'intermédiaire de tuiles.

De plus, la structure particulière des tuiles à emboîtement accessoires aplanies et des parties supérieures des tuiles à emboîtement accessoires aval permet d'encastrer partiellement un panneau photovoltaïque dans la toiture, et limite donc sensiblement la hauteur de dépassement d'un tel panneau photovoltaïque par rapport à la toiture.

En outre, l'utilisation de rails de guidage inférieur et supérieur, d'organes de fixation et d'un dispositif de support pour fixer le panneau photovoltaïque à la charpente assure une fixation aisée et rapide d'un panneau photovoltaïque sur une toiture.

Enfin, puisque le dispositif de support (sur lequel est fixé le panneau photovoltaïque) est fixé et supporté par la charpente (via les rails de support inférieur et supérieur et les organes de fixation), la toiture, formée par les tuiles à emboîtement standard et les tuiles à emboîtement accessoires aval et aplanies, ne supporte pas le panneau photovoltaïque et n'est donc pas susceptible d'être fragilisée par la présence de ce dernier.

Par conséquent, le système de fixation selon la présente invention permet la pose et l'intégration d'un panneau photovoltaïque sur une toiture en garantissant un montage sur le toit qui soit aisé et qui respecte l'esthétique globale du toit et l'étanchéité du toit.

Selon un mode de réalisation de l'invention, le dispositif de support est configuré pour permettre une pose du panneau photovoltaïque en format portrait et/ou en format paysage.

Dans le présent document, on entend par « panneau photovoltaïque », un élément qui fonctionne comme un générateur électrique de courant continu en présence de rayonnement solaire, qui comporte un ensemble de cellules photovoltaïques reliées entre elles électriquement, et qui est muni de câbles de raccordement.

Le système de fixation peut en outre présenter une ou plusieurs des caractéristiques suivantes, prises seules ou en combinaison.

Selon un mode de réalisation de l'invention, chacun des organes de fixation du premier ensemble est une patte de fixation, et chacun des organes de fixation du deuxième ensemble est une patte de fixation.

Selon un mode de réalisation de l'invention, les organes de fixation du premier ensemble et les organes de fixation du deuxième ensemble sont identiques.

Selon un mode de réalisation de l'invention, le rail de support inférieur et le rail de support supérieur sont identiques.

Selon un mode de réalisation de l'invention, chaque tuile à emboîtement accessoire aval est configurée pour être située au même endroit que la tuile à emboîtement standard qu'elle remplace et donc pour se substituer à celle-ci, et chaque tuile à emboîtement accessoire aplanie est configurée pour être située au même endroit que la tuile à emboîtement standard qu'elle remplace et donc pour se substituer à celle-ci.

Selon un mode de réalisation de l'invention, chacune des tuiles à emboîtement accessoires aval et aplanies présente une largeur sensiblement égale à la largeur des tuiles à emboîtement standard, et une longueur sensiblement égale à la longueur des tuiles à emboîtement standard.

Selon un mode de réalisation de l'invention, chacune des tuiles à emboîtement accessoires aval et aplanies présente les mêmes caractéristiques de pose que la tuile à emboîtement standard qu'elle remplace. De façon avantageuse, les tuiles à emboîtement accessoires aval et aplanies sont configurées pour autoriser les mêmes jeux de montage sur un toit que les tuiles à emboîtement standard qu'elles remplacent.

Selon un mode de réalisation de l'invention, la partie supérieure de chaque tuile à emboîtement accessoire aval est globalement plane.

Dans le présent document, on entend par « globalement plane », une tuile ou une partie de tuile qui est plane ou présente de faibles corrugations.

Selon un autre mode de réalisation de l'invention, la partie supérieure de chaque tuile à emboîtement accessoire aval comporte un galbe supérieur situé dans le prolongement supérieur du galbe inférieur respectif et ayant une section transversale en forme de U inversé, ledit galbe supérieur présentant une hauteur maximale inférieure à 70%, et par exemple à 60%, de la hauteur maximale du galbe inférieur de chacune des tuiles à emboîtement accessoires aval. En d'autres termes, le galbe supérieur de chaque tuile à emboîtement accessoire aval est tronqué à 70%, et par exemple à 60%, par rapport au galbe inférieur respectif.

Selon un mode de réalisation de l'invention, le galbe supérieur prévu sur la partie supérieure de chacune des tuiles à emboîtement accessoires aval comporte une portion longitudinale centrale qui est sensiblement plane et deux portions longitudinales latérales disposées de part et d'autre de la portion longitudinale centrale respective.

Selon un mode de réalisation de l'invention, chaque tuile à emboîtement accessoire aplanie est globalement plane.

Selon un autre mode de réalisation de l'invention, chaque tuile à emboîtement accessoire aplanie comporte un galbe longitudinal ayant une section transversale en forme de U inversé et configuré pour recouvrir partiellement le galbe supérieur d'une tuile à emboîtement accessoire aval appartenant au rang immédiatement inférieur ou le galbe longitudinal d'une tuile à emboîtement accessoire aplanie appartenant au rang immédiatement inférieur.

Selon un mode de réalisation de l'invention, le galbe longitudinal de chacune des tuiles à emboîtement accessoires aplanies comporte une portion longitudinale centrale qui est sensiblement plane et deux portions longitudinales latérales disposées de part et d'autre de la portion longitudinale centrale respective.

Selon un mode de réalisation de l'invention, le galbe longitudinal de chaque tuile à emboîtement accessoire aplanie s'étend sur tout ou partie de la longueur de la tuile à emboîtement accessoire aplanie respective.

Selon un mode de réalisation de l'invention, le galbe longitudinal de chaque tuile à emboîtement accessoire aplanie s'étend depuis le bord de tête de la tuile à emboîtement accessoire aplanie respective jusqu'au bord de pied de la tuile à emboîtement accessoire aplanie respective.

Selon un mode de réalisation de l'invention, le galbe longitudinal de chaque tuile à emboîtement accessoire aplanie présente un profil, une section transversale et/ou une largeur qui sont variables le long de la longueur dudit galbe longitudinal.

Selon un mode de réalisation de l'invention, chacun des organes de fixation des premier et deuxième ensembles présente une forme globalement en L.

Selon un mode de réalisation de l'invention, chacun des organes de fixation comporte une partie de fixation configurée pour être fixée au rail de support inférieur ou au rail de support supérieur, et une partie de support qui est allongée, la partie de support de chacun des organes de fixation du premier ensemble étant configurée pour s'étendre entre une tuile à emboîtement accessoire aval respective et une tuile à emboîtement accessoire aplanie respective appartenant à deux rangs successifs et pour faire saille du bord de pied de la tuile à emboîtement accessoire aplanie respective, la partie de support de chacun des organes de fixation du deuxième ensemble étant configurée pour s'étendre entre deux tuiles à emboîtement accessoires aplanies respectives appartenant à deux rangs successifs et pour faire saille du bord de pied de la tuile à emboîtement accessoire aplanie respective appartenant au rang supérieur desdits deux rangs successifs, le dispositif de support étant configuré pour être fixé aux parties de support des organes de fixation des premier et deuxième ensembles et pour être supporté par lesdites parties de support des premier et deuxième ensembles.

Selon un mode de réalisation de l'invention, la partie de support de chacun des organes de fixation du premier ensemble est configurée pour être sensiblement alignée avec et s'étendre au-dessus d'un galbe supérieur d'une tuile à emboîtement accessoire aval appartenant au même rang que le liteau sur lequel est destiné à prendre appui le rail de support inférieur.

Selon un mode de réalisation de l'invention, la partie de support de chacun des organes de fixation du premier ensemble est configurée pour s'étendre sensiblement le long d'un plan longitudinal médian du galbe supérieur de la tuile à emboîtement accessoire aval respective.

Selon un mode de réalisation de l'invention, la partie de support de chacun des organes de fixation du deuxième ensemble est configurée pour être sensiblement alignée avec et s'étendre au-dessus d'un galbe longitudinal d'une tuile à emboîtement accessoire aplanie appartenant au même rang que le liteau sur lequel est destiné à prendre appui le rail de support supérieur.

Selon un mode de réalisation de l'invention, la partie de support de chacun des organes de fixation du deuxième ensemble est configurée pour s'étendre sensiblement le long d'un plan longitudinal médian du galbe longitudinal de la tuile à emboîtement accessoire aplanie respective.

Selon un mode de réalisation de l'invention, chacun des organes de fixation du premier ensemble, et par exemple la partie de support de chacun des organes de fixation du premier ensemble, est pourvu(e) d'un trou de fixation, par exemple taraudé, qui est apte à permettre la fixation de l'organe de fixation respectif au dispositif de support, et chacun des organes de fixation du deuxième ensemble, et par exemple la partie de support de chacun des organes de fixation du deuxième ensemble, est pourvu(e) d'un trou de fixation, par exemple taraudé, qui est apte à permettre la fixation de l'organe de fixation respectif au dispositif de support.

Selon un autre mode de réalisation de l'invention, chacun des organes de fixation du premier ensemble, et par exemple la partie de support de chacun des organes de fixation du premier ensemble, est pourvu(e) d'une tige de fixation filetée qui est apte à permettre la fixation de l'organe de fixation respectif au dispositif de support, et chacun des organes de fixation du deuxième ensemble, et par exemple la partie de support de chacun des organes de fixation du deuxième ensemble, est pourvu(e) d'une tige de fixation filetée qui est apte à permettre la fixation de l'organe de fixation respectif au dispositif de support.

Selon un mode de réalisation de l'invention, chacun des rails de support inférieur et supérieur comporte une aile longitudinale inférieure et une aile longitudinale supérieure, les ailes longitudinales inférieures des rails de support inférieur et supérieur étant configurées pour prendre appui respectivement sur des faces supérieures de deux liteaux appartenant à deux rangs différents.

Selon un mode de réalisation de l'invention, chacun des rails de support inférieur et supérieur présente une section transversale en forme générale de U ou de Oméga.

Selon un mode de réalisation de l'invention, le rail de support inférieur comporte des orifices de fixation inférieurs qui sont sensiblement alignés selon une direction d'alignement sensiblement parallèle à la direction d'extension du rail de support inférieur et chacun des orifices de fixation inférieurs étant apte à permettre la fixation d'un organe de fixation respectif au rail de support inférieur, et le rail de support supérieur comporte des orifices de fixation supérieurs qui sont sensiblement alignés selon une direction d'alignement sensiblement parallèle à la direction d'extension du rail de support supérieur et chacun des orifices de fixation supérieurs étant apte à permettre la fixation d'un organe de fixation respectif au rail de support supérieur.

Selon un mode de réalisation de l'invention, les orifices de fixation inférieurs sont répartis en une ou plusieurs rangée(s) et sont régulièrement espacés le long du rail de support inférieur, et les orifices de fixation supérieurs sont répartis en une ou plusieurs rangée(s) et sont régulièrement espacés le long du rail de support supérieur.

Selon un mode de réalisation de l'invention, les orifices de fixation inférieurs sont prévus sur l'aile longitudinale supérieure du rail de support inférieur, et les orifices de fixation supérieurs sont prévus sur l'aile longitudinale supérieure du rail de support supérieur.

Selon un mode de réalisation de l'invention, chacun des orifices de fixation inférieurs est oblong et s'étend sensiblement parallèlement à la direction d'extension du rail de support inférieur, et chacun des orifices de fixation supérieurs est oblong et s'étend sensiblement parallèlement à la direction d'extension du rail de support supérieur. Une telle configuration des orifices de fixation inférieurs permet la fixation d'un organe de fixation respectif au rail de support inférieur quelle que soit la position occupée par ledit organe de fixation sur le rail de support inférieur, et une telle configuration des orifices de fixation supérieurs permet la fixation d'un organe de fixation respectif au rail de support supérieur quelle que soit la position occupée par ledit organe de fixation sur le rail de support supérieur.

Selon un mode de réalisation de l'invention, chacune des tuiles à emboîtement accessoires aval est munie d'au moins un élément de retenue s'étendant depuis la face interne de ladite tuile à emboîtement accessoire aval et situé à proximité du bord de tête de ladite tuile à emboîtement accessoire aval, l'au moins un élément de retenue prévu sur chacune des tuiles à emboîtement accessoires aval étant apte à prendre appui sur un liteau de la charpente ou sur le rail de support inférieur lorsque ce dernier est fixé à la charpente. De façon avantageuse, l'au moins un élément de retenue prévu sur chacune des tuiles à emboîtement accessoires aval est apte à prendre appui sur l'aile longitudinale inférieure du rail de support inférieur lorsque ce dernier est fixé à la charpente.

Selon un mode de réalisation de l'invention, chacune des tuiles à emboîtement accessoires aplanies est munie d'au moins un élément de retenue s'étendant depuis la face interne de ladite tuile à emboîtement accessoire aplanie et situé à proximité du bord de tête de ladite tuile à emboîtement accessoire aplanie, l'au moins un élément de retenue prévu sur chacune des tuiles à emboîtement accessoires aplanies étant apte à prendre appui sur un liteau de la charpente ou sur le rail de support supérieur lorsque ce dernier est fixé à la charpente. De façon avantageuse, l'au moins un élément de retenue prévu sur chacune des tuiles à emboîtement accessoires aplanies est apte à prendre appui sur l'aile longitudinale inférieure du rail de support supérieur lorsque ce dernier est fixé à la charpente.

Selon un mode de réalisation de l'invention, chacun des organes de fixation du premier ensemble est configuré pour être fixé par vissage sur le rail de support inférieur, et chacun des organes de fixation du deuxième ensemble est configuré pour être fixé par vissage sur le rail de support supérieur.

Selon un mode de réalisation de l'invention, chacun des rails de support inférieur et supérieur est configuré pour être fixé par exemple par vissage à la charpente, et plus particulièrement à aux moins trois chevrons ou trois fermettes de charpente.

Selon un mode de réalisation de l'invention, chacun des rails de support inférieur et supérieur comporte une paroi de fond munie d'une série de trous de fixation, par exemple de forme oblongue et par exemple répartis en une ou plusieurs rangée(s), configurés pour permettre la fixation dudit rail de support inférieur ou supérieur à la charpente, et ce quelle que soit la position des éléments de charpente sur lequel est fixé ledit rail de support inférieur ou supérieur.

Selon un mode de réalisation de l'invention, le dispositif de support comporte un organe de support inférieur et un organe de support supérieur qui sont allongés et qui sont sensiblement parallèles l'un à l'autre, les organes de support inférieur et supérieur étant configurés pour être fixés respectivement aux organes de fixation du premier ensemble et aux organes de fixation du deuxième ensemble, l'organe de support inférieur comportant des trous de fixation inférieurs qui sont sensiblement alignés selon une direction d'alignement sensiblement parallèle à la direction d'extension de l'organe de support inférieur et chacun des trous de fixation inférieurs étant apte à permettre la fixation d'un organe de fixation respectif à l'organe de support inférieur, l'organe de support supérieur comportant des trous de fixation supérieurs qui sont sensiblement alignés selon une direction d'alignement sensiblement parallèle à la direction d'extension de l'organe de support supérieur et chacun des trous de fixation supérieurs étant apte à permettre la fixation d'un organe de fixation respectif à l'organe de support supérieur.

Selon un mode de réalisation de l'invention, les organes de support inférieur et supérieur sont configurés pour s'étendre sensiblement parallèlement aux liteaux de la charpente.

Selon un autre mode de réalisation de l'invention, les organes de support inférieur et supérieur sont écartés l'un de l'autre, c'est-à-dire sont situés à distance l'un de l'autre.

Selon un mode de réalisation de l'invention, l'organe de support inférieur est une cornière de support inférieure et l'organe de support supérieur est une cornière de support supérieure.

Selon un mode de réalisation de l'invention, le dispositif de support comporte en outre deux organes de support latéraux qui sont sensiblement parallèles l'un à l'autre et qui sont chacun reliés aux organes de support inférieur et supérieur.

Selon un mode de réalisation de l'invention, le dispositif de support est un cadre de support.

Selon un autre mode de réalisation de l'invention, les organes de support inférieur et supérieur sont séparés l'un de l'autre, c'est-à-dire ne sont pas reliés mécaniquement l'un à l'autre.

Selon un mode de réalisation de l'invention, au moins un des trous de fixation inférieurs est oblong et s'étend sensiblement parallèlement à la direction d'extension de l'organe de support inférieur, et au moins un des trous de fixation supérieurs est oblong et s'étend sensiblement parallèlement à la direction d'extension de l'organe de support supérieur.

Selon un mode de réalisation de l'invention, les trous de fixation inférieurs comportent un trou de fixation inférieur central ayant une section sensiblement circulaire, et deux trous de fixation inférieurs latéraux qui sont oblongs, et les trous de fixation supérieurs comportent un trou de fixation supérieur central ayant une section sensiblement circulaire, et deux trous de fixation supérieurs latéraux qui sont oblongs. Une telle configuration du dispositif de support permet un indexage du dispositif de support par rapport à un organe de fixation central du premier ensemble et un organe de fixation central du deuxième ensemble, et une fixation optimale du dispositif de support sur deux organes de fixation latéraux du premier ensemble et deux organes de fixation latéraux du deuxième ensemble. En particulier, une telle configuration du système de fixation de la présente invention permet de tenir compte de la variation latérale du pas de montage des tuiles d'une toiture déjà posée, et donc d'éviter toute découpe des tuiles à emboitement standard de ladite toiture.

Selon un mode de réalisation de l'invention, le dispositif de support est configuré pour être fixé par vissage sur les organes de fixation des premier et deuxième ensembles, et plus particulièrement sur les parties de support des organes de fixation des premier et deuxième ensembles.

Selon un mode de réalisation de l'invention, le dispositif de support comporte un dispositif de réglage d'écartement configuré pour régler un écartement entre les organes de support inférieur et supérieur. La présence d'un tel dispositif de réglage d'écartement permet d'ajuster l'écartement entre les organes de support inférieur et supérieur du dispositif de support en tenant compte de la variation longitudinale du pas de montage des tuiles d'une toiture déjà posée, et donc d'éviter toute découpe des tuiles à emboitement standard de ladite toiture.

Selon un mode de réalisation de l'invention, les deux organes de support latéraux sont configurés pour permettre la fixation d'au moins un panneau photovoltaïque sur lesdits organes de support latéraux, et sont par exemple pourvus d'orifices de fixation.

### Brève description des dessins

D'autres avantages et caractéristiques ressortiront mieux de la description qui va suivre d'un mode de réalisation, donné à titre d'exemple non limitatif, du système de fixation conforme à l'invention, en référence aux dessins annexés sur lesquels :
La figure 1 est une vue partielle en perspective d'une toiture équipée de deux panneaux photovoltaïques fixés à la toiture à l'aide d'un système de fixation selon l'invention ;
La figure 2 est une vue en perspective avant d'une tuile à emboîtement accessoire aval appartenant au système de fixation selon l'invention ;
La figure 3 est une vue en perspective arrière de la tuile à emboîtement accessoire aval de la figure 2 ;
La figure 4 est une vue en perspective avant d'une tuile à emboîtement accessoire aplanie appartenant au système de fixation selon l'invention ;
La figure 5 est une vue en perspective d'un organe de fixation appartenant au système de fixation selon l'invention ;
La figure 6 est une vue partielle en perspective d'un rail de support inférieur appartenant au système de fixation selon l'invention ;
La figure 7 est une vue partielle en perspective du rail de support inférieur de la figure 6 équipé de deux organe de fixation de la figure 5 ;
La figure 8 est une vue en perspective d'un dispositif de support appartenant au système de fixation selon l'invention ;
La figure 9 est une vue partielle d'une portion aval du dispositif de support de la figure 8 ;
La figure 10 est une vue partielle d'une portion amont du dispositif de support de la figure 8 ;
La figure 11 est une vue partielle en perspective d'une toiture comportant une pluralité de rangs de tuiles à emboîtement standard qui ont été déposées ;
La figure 12 est une vue partielle en perspective de la toiture de la figure 11 montrant la fixation de rails de support inférieur et supérieur sur des liteaux d'une charpente ;
La figure 13 est une vue partielle en perspective de la toiture de la figure 11 montrant la pose de tuiles à emboîtement accessoires aval sur le rail de support inférieur ;
La figure 14 est une vue partielle en perspective de la toiture de la figure 11 montrant la fixation d'un premier ensemble d'organes de fixation sur le rail de support inférieur ;
La figure 15 est une vue partielle en perspective de la toiture de la figure 11 montrant la pose de tuiles à emboîtement accessoires aplanies sur des liteaux de la charpente et également sur le rail de support supérieur ;
La figure 16 est une vue partielle en perspective de la toiture de la figure 11 montrant plus particulièrement les parties de support des organes de fixation du premier ensemble s'étendant chacune entre une tuile à emboîtement accessoire aval respective et une tuile à emboîtement accessoire aplanie respective appartenant à deux rangs successifs et faisant saille chacune du bord de pied de la tuile à emboîtement accessoire aplanie respective ;
La figure 17 est une vue partielle en perspective tronquée de la toiture de la figure 16 ;
La figure 18 est une vue partielle en perspective de la toiture de la figure 11 montrant la fixation d'un deuxième ensemble d'organes de fixation sur le rail de support supérieur ;
La figure 19 est une vue partielle en perspective tronquée de la toiture de la figure 16 ;
La figure 20 est une vue partielle en perspective de la toiture de la figure 11 montrant la fixation d'un dispositif de support sur les organes de fixation des premier et deuxième ensembles ;
La figure 21 est une vue partielle en coupe de la toiture de la figure 20 ;
La figure 22 est une vue partielle en perspective de la toiture de la figure 11 montrant la fixation d'un panneau photovoltaïque sur le dispositif de support de la figure 20 ;
La figure 23 est une vue en perspective d'un dispositif de support selon une variante de réalisation de l'invention.

### Description détaillée

Dans la suite de la description du système de fixation suivant l'invention, les mêmes références numériques désignent les mêmes éléments. Les différentes vues ne sont pas nécessairement tracées à l'échelle.

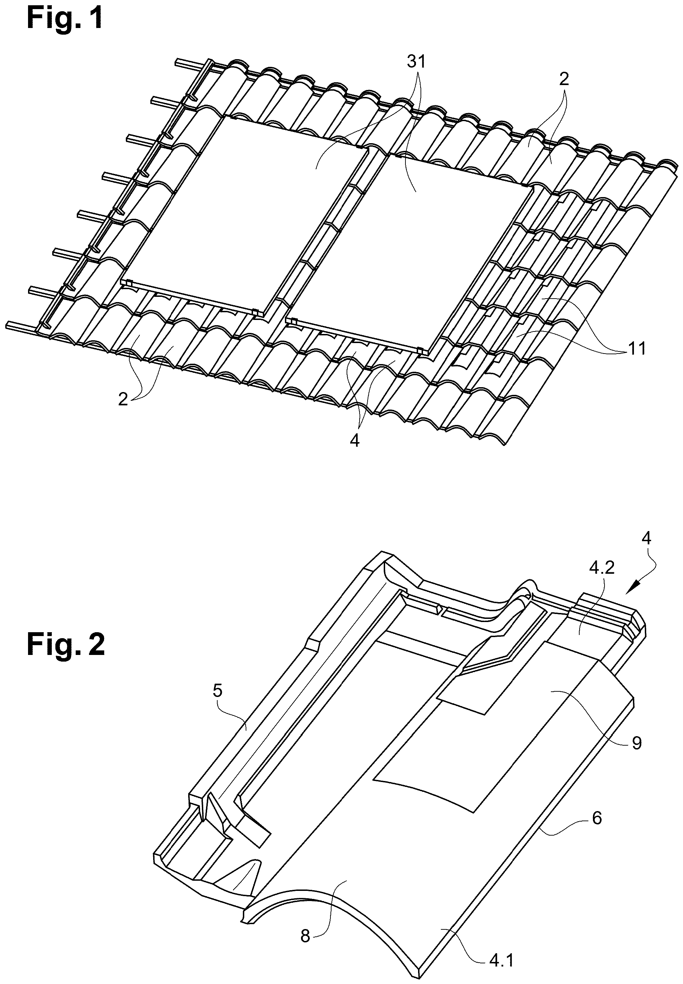

Les figures 1 à 23 représentent un système de fixation configuré pour fixer au moins un panneau photovoltaïque sur une toiture comportant une pluralité de rangs de tuiles à emboîtement standard 2. Les tuiles à emboîtement standard 2 comportent chacune une face externe orientée vers le ciel et une face interne orientée vers une charpente, et sont posées sur des rangs de liteaux 3 de la charpente. Les tuiles à emboîtement standard 2 comportent chacune un galbe longitudinal, également nommé cornet, dont la section transversale est en forme de U inversé. Le galbe longitudinal de chaque tuile à emboîtement standard 2 peut s'étendre sur tout ou partie de la longueur de la tuile à emboîtement standard 2 respective, et par exemple sur tout ou partie de la longueur de la partie visible de la tuile à emboîtement standard 2 respective. De plus, le galbe longitudinal de chaque tuile à emboîtement standard 2 peut présenter un profil, une section transversale et/ou une largeur qui sont variables le long de la longueur dudit galbe longitudinal.

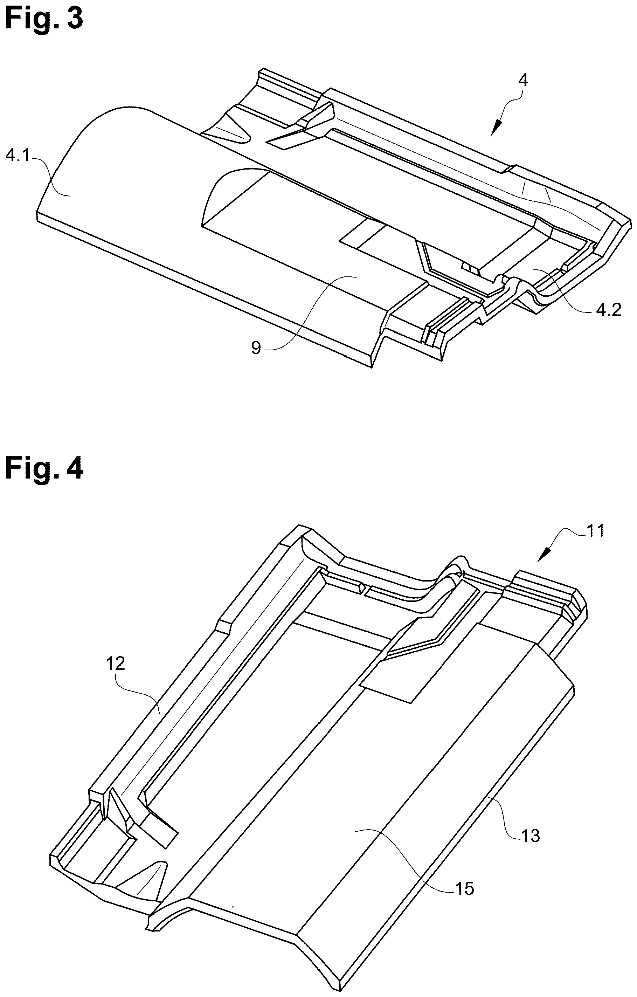

Le système de fixation comprend des tuiles à emboîtement accessoires aval 4 d'un premier type (voir notamment les figures 2 et 3). Chaque tuile à emboîtement accessoire aval 4 présente une largeur égale à la largeur des tuiles à emboîtement standard 2, et une longueur égale à la longueur des tuiles à emboîtement standard 2.

Chaque tuile à emboîtement accessoire aval 4 comporte un premier élément d'emboîtement longitudinal 5 prévu sur la face externe de ladite tuile à emboîtement accessoire aval 4 et s'étendant le long d'un premier bord latéral de ladite tuile à emboîtement accessoire aval 4, et un deuxième élément d'emboîtement longitudinal 6 prévu sur la face interne de ladite tuile à emboîtement accessoire aval 4 et s'étendant le long d'un deuxième bord latéral de ladite tuile à emboîtement accessoire aval 4. Le deuxième élément d'emboîtement longitudinal 6 prévu sur chaque tuile à emboîtement accessoire aval 4 est configuré pour coopérer avec un premier élément d'emboîtement longitudinal 5 prévu sur une tuile à emboîtement accessoire aval 4 adjacente et appartenant au même rang ou sur une tuile à emboîtement standard 2 adjacente et appartenant au même rang. Le premier élément d'emboîtement longitudinal 5 prévu sur chaque tuile à emboîtement accessoire aval 4 est configuré pour coopérer avec un deuxième élément d'emboîtement longitudinal 6 prévu sur une tuile à emboîtement accessoire aval 4 adjacente et appartenant au même rang ou sur une tuile à emboîtement standard 2 adjacente et appartenant au même rang.

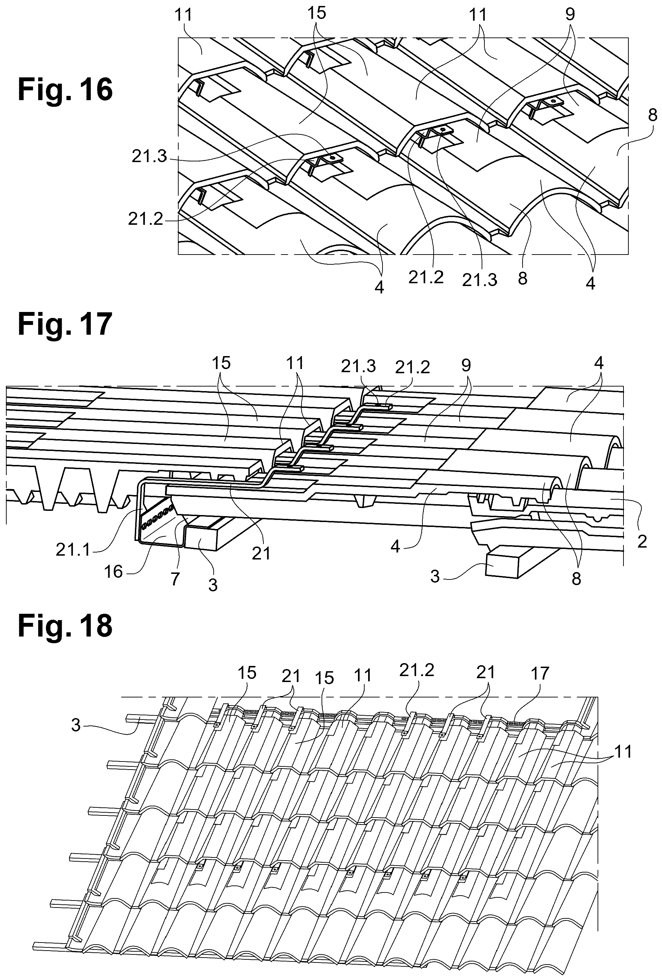

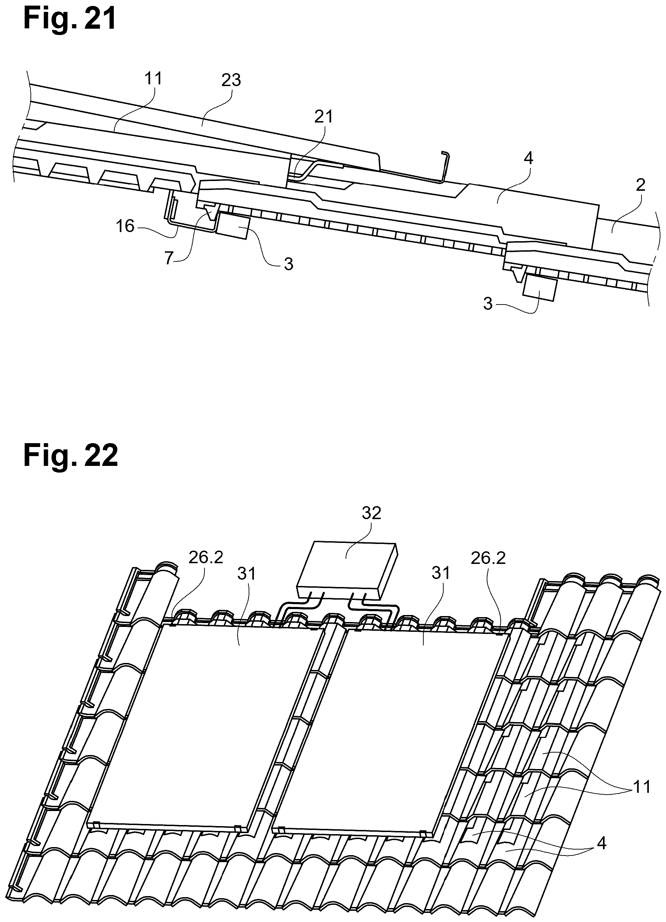

Chaque tuile à emboîtement accessoire aval 4 est avantageusement munie de deux éléments de retenue 7 (voir les figures 17 et 21), tels que des tenons de retenue, s'étendant depuis la face interne de ladite tuile à emboîtement accessoire aval 4 et situés à proximité du bord de tête de ladite tuile à emboîtement accessoire aval 4. Les éléments de retenue 7 prévus sur chacune des tuiles à emboîtement accessoires aval 4 sont notamment aptes à prendre appui sur un liteau 3 appartenant au même rang.

Chaque tuile à emboîtement accessoire aval 4 comporte plus particulièrement une partie inférieure 4.1 qui est pourvue d'un bord de pied et qui est configurée pour prendre appui sur un bord de tête d'une tuile à emboîtement standard 2 appartenant à un rang immédiatement inférieur, et une partie supérieure 4.2 qui est pourvue d'un bord de tête. De façon avantageuse, le bord de pied de chaque tuile à emboîtement accessoire aval 4 présente un profil sensiblement complémentaire du bord de tête de chaque tuile à emboîtement standard 2.

Selon le mode de réalisation représenté sur les figures, la partie inférieure 4.1 de chaque tuile à emboîtement accessoire aval 4 est pourvue d'un galbe inférieur 8 dont la section transversale est en forme de U inversé et qui est configuré pour recouvrir partiellement le galbe longitudinal d'une tuile à emboîtement standard 2 appartenant au rang immédiatement inférieur.

La partie supérieure 4.2 de chaque tuile à emboîtement accessoire aval 4 comporte un galbe supérieur 9 situé dans le prolongement supérieur du galbe inférieur 8 respectif et ayant une section transversale en forme de U inversé. Le galbe supérieur 9 de chaque tuile à emboîtement accessoire aval 4 présente une hauteur maximale inférieure à 60% de la hauteur maximale du galbe inférieur 8 de chacune des tuiles à emboîtement accessoires aval 4, et est donc aplati par rapport au galbe inférieur 8 de la partie inférieure 4.1 de la tuile à emboîtement accessoire aval 4 respective. Le galbe supérieur 9 prévu sur chaque partie supérieure 4.2 comporte plus particulièrement une portion longitudinale centrale qui est sensiblement plane et deux portions longitudinales latérales disposées de part et d'autre de la portion longitudinale centrale respective.

La zone de recouvrement de deux tuiles à emboîtement accessoires aval 4 adjacentes latéralement est ajustable (compte tenu notamment de la forme du galbe inférieur 8 de chaque tuile à emboîtement accessoire aval 4) de manière à pouvoir ajuster le pas de montage latéral des tuiles à emboîtement accessoires aval 4 d'un même rang. En outre, la zone de recouvrement entre une tuile à emboîtement accessoire aval 4 et une tuile à emboîtement standard respective appartenant à deux rangs successifs est ajustable (compte tenu notamment de la forme du galbe inférieur 8 de chaque tuile à emboîtement accessoire aval 4) de manière à pouvoir ajuster le pas de montage longitudinal des tuiles à emboîtement accessoires aval 4.

Le système de fixation comprend également des tuiles à emboîtement accessoires aplanies 11 (voir notamment la figure 4), également nommées tuiles à emboîtement accessoires amont, d'un deuxième type qui sont différentes des tuiles à emboîtement accessoires aval 4 et des tuiles à emboîtement standard 2. Chaque tuile à emboîtement accessoire aplanie 11 présente une largeur égale à la largeur des tuiles à emboîtement standard 2, et une longueur égale à la longueur des tuiles à emboîtement standard 2.

Chaque tuile à emboîtement accessoire aplanie 11 comprend un bord de pied configuré pour prendre appui sur un bord de tête d'une tuile à emboîtement accessoire aval 4 appartenant à un rang immédiatement inférieur, et un bord de tête configuré pour être recouvert par un bord de pied d'une tuile à emboîtement accessoire aplanie 11, ou d'une tuile à emboîtement standard 2, appartenant à un rang immédiatement supérieur. De façon avantageuse, le bord de pied de chaque tuile à emboîtement accessoire aplanie 11 présente un profil sensiblement complémentaire du bord de tête de chaque tuile à emboîtement accessoire aval 4 et de chaque tuile à emboîtement accessoire aplanie 11.

Chaque tuile à emboîtement accessoire aplanie 11 comporte également un premier élément d'emboîtement longitudinal 12 prévu sur la face externe de ladite tuile à emboîtement accessoire aplanie 11 et s'étendant le long d'un premier bord latéral de ladite tuile à emboîtement accessoire aplanie 11, et un deuxième élément d'emboîtement longitudinal 13 prévu sur la face interne de ladite tuile à emboîtement accessoire aplanie 11 et s'étendant le long d'un deuxième bord latéral de ladite tuile à emboîtement accessoire aplanie 11. Le deuxième élément d'emboîtement longitudinal 13 prévu sur chaque tuile à emboîtement accessoire aplanie 11 est configuré pour coopérer avec un premier élément d'emboîtement longitudinal 12 prévu sur une tuile à emboîtement accessoire aplanie 11 adjacente et appartenant au même rang ou sur une tuile à emboîtement standard 2 adjacente et appartenant au même rang. Le premier élément d'emboîtement longitudinal 12 prévu sur chaque tuile à emboîtement accessoire aplanie 11 est configuré pour coopérer avec un deuxième élément d'emboîtement longitudinal 13 prévu sur une tuile à emboîtement accessoire aplanie 11 adjacente et appartenant au même rang ou sur une tuile à emboîtement standard 2 adjacente et appartenant au même rang.

Chaque tuile à emboîtement accessoire aplanie 11 est avantageusement munie de deux éléments de retenue 14, tels que des tenons de retenue, s'étendant depuis la face interne de ladite tuile à emboîtement accessoire aplanie 11 et situés à proximité du bord de tête de ladite tuile à emboîtement accessoire aplanie 11. Les éléments de retenue 14 prévus sur chacune des tuiles à emboîtement accessoires aplanies 11 sont notamment aptes à prendre appui sur un liteau 3 appartenant au même rang.

Selon le mode de réalisation représenté sur les figures, chaque tuile à emboîtement accessoire aplanie 11 comporte un galbe longitudinal 15 ayant une section transversale en forme de U inversé et configuré pour recouvrir partiellement le galbe supérieur 9 d'une tuile à emboîtement accessoire aval 4 appartenant au rang immédiatement inférieur ou le galbe longitudinal 15 d'une tuile à emboîtement accessoire aplanie 11 appartenant au rang immédiatement inférieur. De façon avantageuse, le galbe longitudinal 15 de chaque tuile à emboîtement accessoire aplanie 11 s'étend depuis le bord de tête de la tuile à emboîtement accessoire aplanie 11 respective jusqu'au bord de pied de la tuile à emboîtement accessoire aplanie 11 respective.

Comme le galbe supérieur 9 de chaque tuile à emboîtement accessoire aval 4, le galbe longitudinal 15 de chacune des tuiles à emboîtement accessoires aplanies 11 comporte une portion longitudinale centrale qui est sensiblement plane et deux portions longitudinales latérales disposées de part et d'autre de la portion longitudinale centrale respective.

La zone de recouvrement de deux tuiles à emboîtement accessoires aplanies 11 adjacentes latéralement est ajustable (compte tenu notamment de la forme du galbe longitudinal 15 de chaque tuile à emboîtement accessoire aplanie 11) de manière à pouvoir ajuster le pas de montage latéral des tuiles à emboîtement accessoires aplanies 11 d'un même rang. En outre, la zone de recouvrement entre deux tuile à emboîtement accessoire aplanies 11 appartenant à deux rangs successifs est ajustable (compte tenu notamment de la forme du galbe longitudinal 15 de chaque tuile à emboîtement accessoire aplanie 11) de manière à pouvoir ajuster le pas de montage longitudinal des tuiles à emboîtement accessoires aplanies 11.

Le système de fixation comprend en outre un rail de support inférieur 16 et un rail de support supérieur 17 configurés pour prendre appui respectivement sur des faces supérieures de deux liteaux 3 appartenant à deux rangs différents, et pour être fixés, par exemple par vissage, à des chevrons de la charpente. Chacun des rails de support inférieur et supérieur 16, 17 présente par exemple une longueur comprise entre 2 et 2,4 m.

Chaque rail de support inférieur 16 comporte une aile longitudinale inférieure 16.1 et une aile longitudinale supérieure 16.2, et une paroi de liaison 16.3, également nommée paroi de fond, reliant les ailes longitudinales inférieure et supérieure 16.1, 16.2 respectives, et chaque rail de support supérieur 17 comporte une aile longitudinale inférieure 17.1 et une aile longitudinale supérieure 17.2, et une paroi de liaison 17.3 reliant les ailes longitudinales inférieure et supérieure 17.1, 17.2 respectives. Chacun des rails de support inférieur et supérieur 16, 17 présente par exemple une section transversale en forme générale de U ou de Oméga.

Les ailes longitudinales inférieures 16.1, 17.1 des rails de support inférieur et supérieur 16, 17 sont plus particulièrement configurées pour prendre appui respectivement sur des faces supérieures de deux liteaux 3 appartenant à deux rangs différents. Les éléments de retenue 7 prévus sur chacune des tuiles à emboîtement accessoires aval 4, destinées à être posées sur le liteau 3 contre lequel prend appui le rail de support inférieur 16, sont plus particulièrement aptes à prendre appui sur l'aile longitudinale inférieure 16.1 du rail de support inférieur 16, et les éléments de retenue 14 prévus sur chacune des tuiles à emboîtement accessoires aplanies 11, destinées à être posées sur le liteau 3 contre lequel prend appui le rail de support supérieur 17, sont plus particulièrement aptes à prendre appui sur l'aile longitudinale inférieure 17.1 du rail de support supérieur 17.

Le rail de support inférieur 16 comporte en outre des orifices de fixation inférieurs 18 qui sont sensiblement alignés selon une direction d'alignement sensiblement parallèle à la direction d'extension du rail de support inférieur 16, et le rail de support supérieur 17 comporte des orifices de fixation supérieurs 19 qui sont sensiblement alignés selon une direction d'alignement sensiblement parallèle à la direction d'extension du rail de support supérieur 17. Les orifices de fixation inférieurs 18 sont plus particulièrement prévus sur l'aile longitudinale supérieure 16.2 du rail de support inférieur 16, et les orifices de fixation supérieurs 19 sont plus particulièrement prévus sur l'aile longitudinale supérieure 17.2 du rail de support supérieur 17.

Selon le mode de réalisation représenté sur les figures, chacun des orifices de fixation inférieurs 18 est oblong et s'étend parallèlement à la direction d'extension du rail de support inférieur 16, et chacun des orifices de fixation supérieurs 19 est également oblong et s'étend parallèlement à la direction d'extension du rail de support supérieur 17. De façon avantageuse, les orifices de fixation inférieurs 18 sont répartis en une ou plusieurs rangées et sont régulièrement espacés le long du rail de support inférieur 16, et les orifices de fixation supérieurs 19 sont répartis en une ou plusieurs rangées et sont régulièrement espacés le long du rail de support supérieur 17.

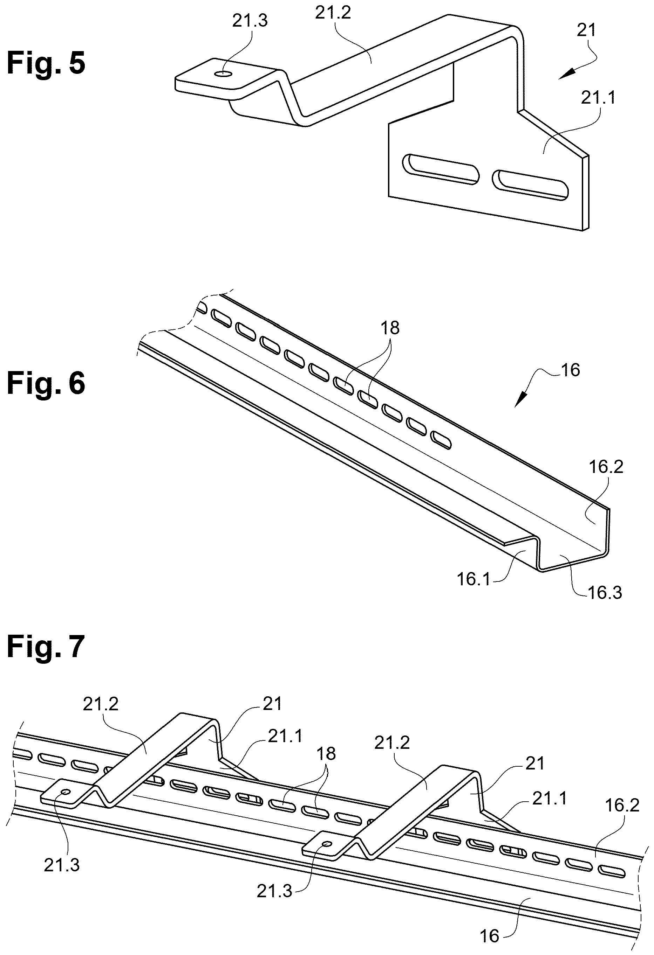

Le système de fixation comprend de plus une pluralité d'organes de fixation 21 (voir notamment la figure 5) comprenant un premier ensemble d'organes de fixation 21 configurés pour être fixés au rail de support inférieur 16, et un deuxième ensemble d'organes de fixation supérieurs 21 configurés pour être fixés au rail de support supérieur 17. Selon le mode de réalisation représenté sur les figures, chacun des organes de fixation 21 des premier et deuxième ensembles a une forme globalement en L, et se présente sous la forme d'une patte de fixation.

Chacun des organes de fixation 21 comporte une partie de fixation 21.1 configurée pour être fixée, par vissage, au rail de support inférieur 16 ou au rail de support supérieur 17 selon que ledit organe de fixation 21 appartienne au premier ou au deuxième ensemble. Chacun des orifices de fixation inférieurs 18 est plus particulièrement apte à permettre la fixation, par vissage, de la partie de fixation 21.1 d'un organe de fixation 21 respectif, appartenant au premier ensemble, au rail de support inférieur 16. Chacun des orifices de fixation supérieurs 19 est plus particulièrement apte à permettre la fixation, par vissage, de la partie de fixation 21.1 d'un organe de fixation 21 respectif, appartenant au deuxième ensemble, au rail de support supérieur 17.

Chacun des organes de fixation 21 comporte en outre une partie de support 21.2 qui est allongée. La partie de support 21.2 de chaque organe de fixation 21 appartenant au premier ensemble est configurée pour s'étendre entre une tuile à emboîtement accessoire aval 4 respective, appartenant au même rang que le liteau 3 sur lequel prend appui le rail de support inférieur 16, et une tuile à emboîtement accessoire aplanie 11 respective, appartenant à un rang immédiatement supérieur au rang du liteau 3 sur lequel prend appui le rail de support inférieur 16, et pour faire saille du bord de pied de la tuile à emboîtement accessoire aplanie 11 respective.

Selon le mode de réalisation représenté sur les figures, la partie de support 21.2 de chacun des organes de fixation 21 appartenant au premier ensemble est configurée pour être alignée avec et s'étendre au-dessus d'un galbe supérieur 9 de la tuile à emboîtement accessoire aval 4 respective appartenant au même rang que le liteau 3 sur lequel prend appui le rail de support inférieur 16. De façon avantageuse, la partie de support 21.2 de chacun des organes de fixation 21 appartenant au premier ensemble est configurée pour s'étendre le long d'un plan longitudinal médian du galbe supérieur 9 de la tuile à emboîtement accessoire aval 4 respective.

La partie de support 21.2 de chaque organe de fixation 21 appartenant au deuxième ensemble est configurée pour s'étendre entre une tuile à emboîtement accessoire aplanie 11 respective, appartenant au même rang que le liteau 3 sur lequel prend appui le rail de support supérieur 17, et une tuile à emboîtement accessoire aplanie 11 respective, appartenant à un rang immédiatement supérieur au rang du liteau 3 sur lequel prend appui le rail de support supérieur 17, et pour faire saille du bord de pied de la tuile à emboîtement accessoire aplanie 11 respective appartenant au rang immédiatement supérieur au rang du liteau 3 sur lequel prend appui le rail de support supérieur 17.

Selon le mode de réalisation représenté sur les figures, la partie de support 21.2 de chacun des organes de fixation 21 appartenant au deuxième ensemble est configurée pour être alignée avec et s'étendre au-dessus d'un galbe longitudinal 15 d'une tuile à emboîtement accessoire aplanie 11 respective appartenant au même rang que le liteau 3 sur lequel prend appui le rail de support supérieur 17. De façon avantageuse, la partie de support 21.2 de chacun des organes de fixation 21 appartenant au deuxième ensemble est configurée pour s'étendre le long d'un plan longitudinal médian du galbe longitudinal 15 de la tuile à emboîtement accessoire aplanie 11 respective.

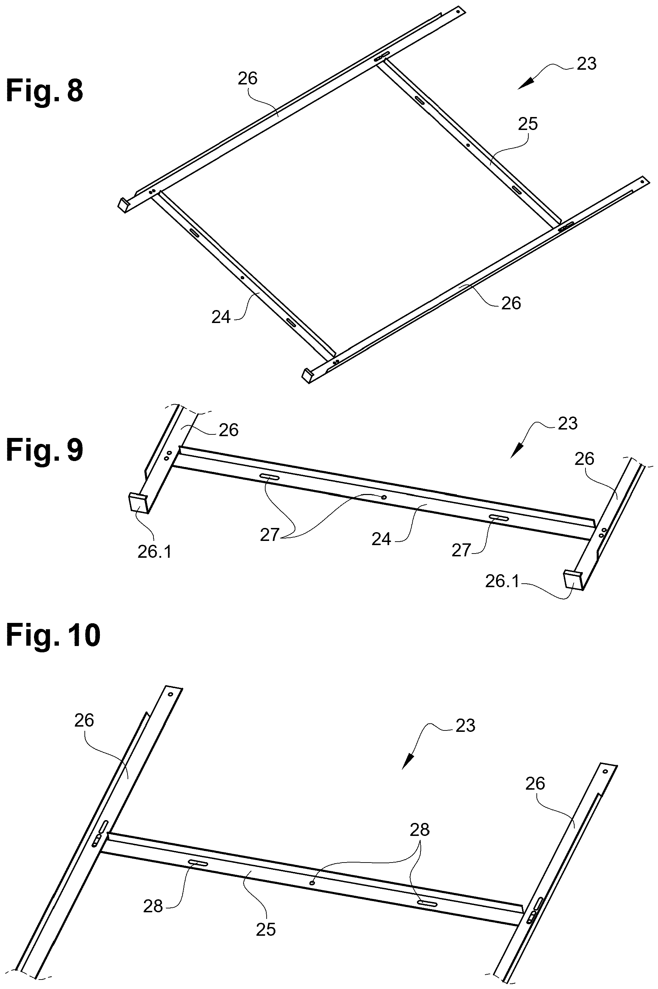

Le système de fixation comprend également un dispositif de support 23 (voir notamment la figure 8) configuré pour être fixé, par vissage, aux parties de support 21.2 des organes de fixation 21 appartenant au premier et deuxième ensembles, et pour être supporté par lesdites parties de support 21.2. Le dispositif de support 23 est configuré pour s'étendre au-dessus de tuiles à emboîtement accessoires aval et aplanies 4, 11 et pour supporter au moins un panneau photovoltaïque. Selon le mode de réalisation représenté sur les figures 1 à 23, le dispositif de support 23 est un cadre de support.

De façon avantageuse, chacun des organes de fixation 21, et par exemple la partie de support 21.2 de chacun des organes de fixation 21, est pourvu(e) d'un trou de fixation 21.3 qui est apte à permettre la fixation, par vissage, de l'organe de fixation 21 respectif au dispositif de support 23.

Selon le mode de réalisation représenté sur les figures, le dispositif de support 23 comporte un organe de support inférieur 24, tel qu'une cornière de support inférieure ou un profilé de support inférieur, et un organe de support supérieur 25, tel qu'une cornière de support supérieure ou un profilé de support supérieur, qui sont parallèles l'un à l'autre et qui sont configurés pour être fixés respectivement aux organes de fixation 21 du premier ensemble et aux organes de fixation 21 du deuxième ensemble, et deux organes de support latéraux 26 qui sont parallèles l'un à l'autre et qui sont chacun reliés aux organes de support inférieur et supérieur 24, 25.

L'organe de support inférieur 24 comporte plus particulièrement des trous de fixation inférieurs 27 qui sont alignés selon une direction d'alignement parallèle à la direction d'extension de l'organe de support inférieur 24. Chacun des trous de fixation inférieurs 27 est apte à permettre la fixation, par vissage, d'un organe de fixation 21 respectif, appartenant au premier ensemble, à l'organe de support inférieur 24. De façon avantageuse, les trous de fixation inférieurs 27 comportent un trou de fixation inférieur central ayant une section circulaire, et deux trous de fixation inférieurs latéraux qui sont oblongs et qui s'étendent parallèlement à la direction d'extension de l'organe de support inférieur 24.

De façon similaire, l'organe de support supérieur 25 comporte des trous de fixation supérieurs 28 qui sont alignés selon une direction d'alignement parallèle à la direction d'extension de l'organe de support supérieur 25. Chacun des trous de fixation supérieurs 28 est apte à permettre la fixation, par vissage, d'un organe de fixation 21 respectif, appartenant au deuxième ensemble, à l'organe de support supérieur 25. De façon avantageuse, les trous de fixation supérieurs 28 comportent un trou de fixation supérieur central ayant une section circulaire, et deux trous de fixation supérieurs latéraux qui sont oblongs et qui s'étendent parallèlement à la direction d'extension de l'organe de support supérieur 25.

Selon le mode de réalisation représenté sur les figures, le dispositif de support 23 comporte un dispositif de réglage d'écartement configuré pour régler un écartement entre les organes de support inférieur et supérieur 24, 25. La présence d'un tel dispositif de réglage d'écartement permet d'adapter l'écartement entre les organes de support inférieur et supérieur 24, 25 en fonction du pureau entre les liteaux 3 sur lesquels prennent appui respectivement les rails de support inférieur et supérieur 16, 17.

Selon le mode de réalisation représenté sur les figures, les deux organes de support latéraux 26 du dispositif de support 23 sont configurées pour permettre la fixation d'au moins un panneau photovoltaïque 31 sur lesdits organes de support latéraux 26, et donc sur le dispositif de support 23.Chaque organe de support latéral 26 peut par exemple être pourvu d'une portion de maintien inférieure 26.1 (voir la figure 9) configurée pour coopérer avec un bord inférieur du panneau photovoltaïque 31, et d'un organe de maintien supérieur 26.2 (voir la figure 22) configuré pour coopérer avec un bord supérieur du panneau photovoltaïque 31 de manière à empêcher un basculement vers l'avant du panneau photovoltaïque 31. De façon avantageuse, chaque organe de maintien supérieur 26.2 est amovible de manière à faciliter la pose du panneau photovoltaïque 31 sur le dispositif de support 23.

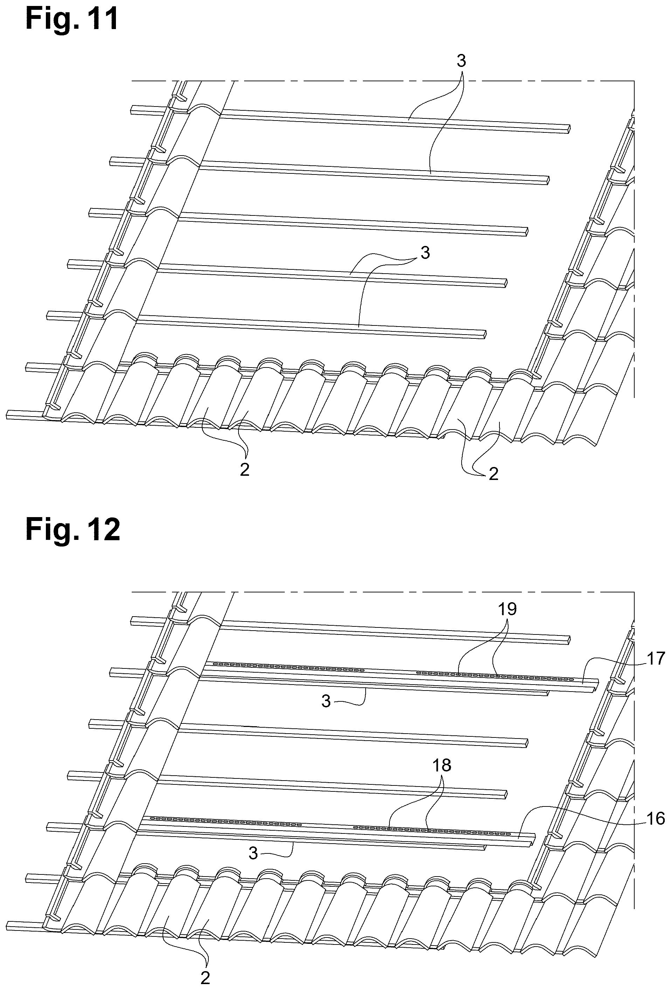

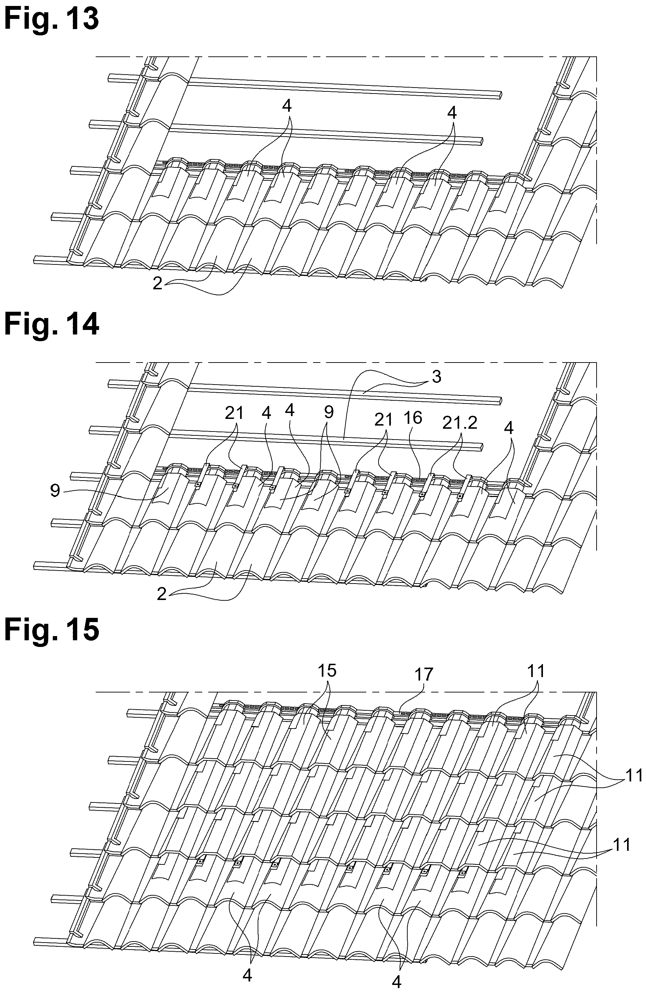

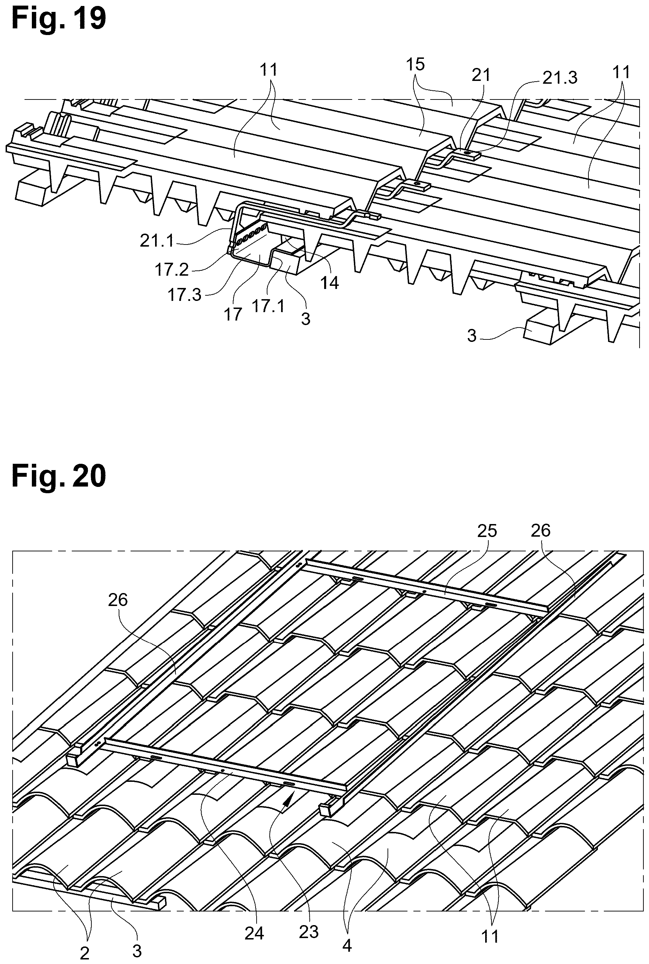

Un procédé de fixation d'un panneau photovoltaïque 31 sur une toiture, comportant une pluralité de rangs de tuiles à emboîtement standard 2, est décrit ci-après. Un tel procédé de fixation comprend notamment les étapes suivantes :
- dépose d'une pluralité de tuiles à emboîtement standard 2, par exemple dix tuiles à emboîtement standard 2 adjacentes sur six rangs successifs (voir la figure 11),
- positionnement du rail de support inférieur 16 sur la face supérieure d'un liteau 3 de la charpente, par exemple appartenant au premier rang de tuiles à emboîtement standard 2 déposées,
- fixation, par vissage, du rail de support inférieur 16 sur des chevrons de la charpente,
- positionnement du rail de support supérieur 17 sur la face supérieure d'un liteau 3 de la charpente, par exemple appartenant au quatrième rang de tuiles à emboîtement standard 2 déposées,
- fixation, par vissage, du rail de support supérieur 17 sur des chevrons de la charpente (voir la figure 12),
- pose d'un rang de tuiles à emboîtement accessoires aval 4 en faisant coopérer les éléments de retenue 7 prévus sur chacune des tuiles à emboîtement accessoires aval 4 avec l'aile longitudinale inférieure 16.1 du rail de support inférieur 16 (voir la figure 13),
- fixation de plusieurs organes de fixation 21, par exemple au nombre de trois, sur le rail de support inférieur 16, par vissage de la partie de fixation 21.1 de chacun des organes de fixation 21 dans un orifice de fixation inférieur 18 respectif, de telle sorte que la partie de support inférieure 21.2 de chacun des organes de fixation 21 soit sensiblement alignée avec et recouvre partiellement le galbe supérieur 9 d'une tuile à emboîtement accessoire aval 4 respective (voir la figure 14),
- pose de deux rangs successifs de tuiles à emboîtement accessoires aplanies 11, en faisant coopérer les éléments de retenue 14 prévus sur chacune des tuiles à emboîtement accessoires aplanies 11 avec des liteaux 3 respectifs,
- pose d'un rang de tuiles à emboîtement accessoires aplanies 11, en faisant coopérer les éléments de retenue 14 prévus sur chacune des tuiles à emboîtement accessoires aplanies 11 avec l'aile longitudinale inférieure 17.1 du rail de support supérieur 17 (voir la figure 15),
- fixation de plusieurs organes de fixation 21, par exemple au nombre de trois, sur le rail de support supérieur 17, par vissage de la partie de fixation 21.1 de chacun des organes de fixation 21 dans un orifice de fixation supérieur 19 respectif, de telle sorte que la partie de support 21.2 de chacun des organes de fixation 21 soit sensiblement alignée avec et recouvre partiellement le galbe longitudinal 15 d'une tuile à emboîtement accessoire aplanie 11 respective (voir la figure 18),
- pose d'un rang de tuiles à emboîtement accessoires aplanies 11, en faisant coopérer les éléments de retenue 14 prévus sur chacune des tuiles à emboîtement accessoires aplanies 11 avec des liteaux 3 correspondants,
- positionnement d'un micro-onduleur 32 sur la charpente dans le dernier rang découvert (voir la figure 22),
- fixation, par vissage, de l'organe de support inférieur 24 du dispositif de support 23 aux parties de support 21.2 des organes de fixation 21 fixés au rail de support inférieur 16,
- réglage, si nécessaire, de l'écartement entre les organes de support inférieur et supérieur 24, 25,
- fixation, par vissage, de l'organe de support supérieur 25 du dispositif de support 23 aux parties de support 21.2 des organes de fixation 21 fixés au rail de support supérieur 17 (voir la figure 20),
- fixation, par vissage, du panneau photovoltaïque 31 aux organes de support latéraux 26 du dispositif de support 23 (voir la figure 22),
- raccordement du panneau photovoltaïque 31 au micro-onduleur 32 à l'aide de câbles de raccordement 33,
- positionnement des câbles de raccordement 33 dans l'axe d'un galbe longitudinal 15 d'une tuile à emboîtement accessoire aplanie 11 appartenant au dernier rang de tuiles à emboîtement accessoires aplanies 11, et
- repose du dernier rang de tuiles à emboîtement standard 2 déposées (voir la figure 1).

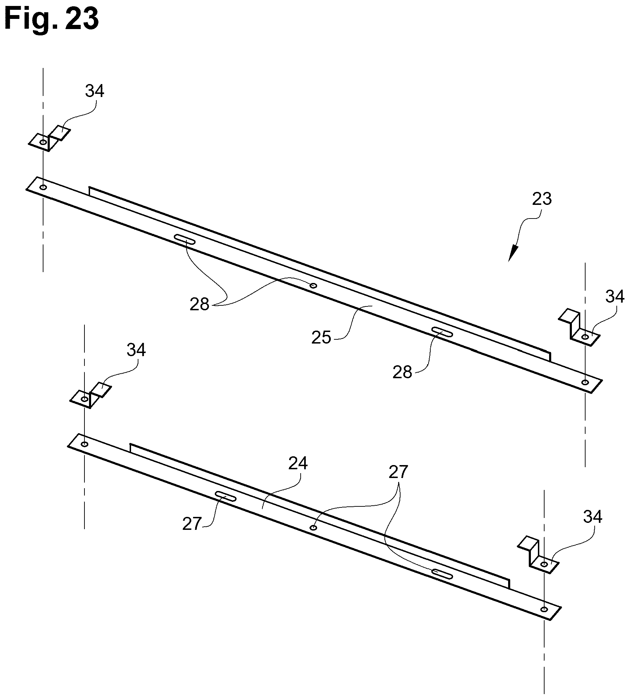

La figure 23 représente un dispositif de support 23 selon une variante de réalisation de l'invention dans laquelle le dispositif de support 23 est dépourvu d'organes de support latéraux 26. Selon une telle variante de réalisation de l'invention, les organes de support inférieur et supérieur 24, 25 sont séparés l'un de l'autre, c'est-à-dire ne sont pas reliés mécaniquement l'un à l'autre, et le dispositif de support 23 est en outre pourvus d'organes de maintien latéraux 34 configurés pour coopérer avec le panneau photovoltaïque de manière à le maintenir en position. Chaque organe de maintien latéral 34 est configuré pour être fixé, par exemple de manière amovible, à une portion d'extrémité respective de l'organe de support inférieur 24 ou de l'organe de support supérieur 25 et pour coopérer avec un bord latéral du panneau photovoltaïque, qui peut être orienté par exemple en format portrait ou en format paysage.

Bien entendu, l'invention n'est nullement limitée au mode de réalisation décrit et illustré qui n'a été donné qu'à titre d'exemple. Des modifications restent possibles, notamment du point de vue de la constitution des divers éléments ou par substitution d'équivalents techniques, sans sortir pour autant du domaine de protection de l'invention, comme définie par les revendications annexées. 1

## Revendications

1. Système de fixation configuré pour fixer au moins un panneau photovoltaïque (31) sur une toiture comportant une pluralité de rangs de tuiles à emboîtement standard (2), les tuiles à emboîtement standard (2) comportant chacune une face externe orientée vers le ciel et une face interne orientée vers une charpente et étant posées sur des rangs de liteaux (3) de la charpente, les tuiles à emboîtement standard (2) comportant chacune au moins un galbe longitudinal dont la section transversale est en forme de U inversé, le système de fixation comprenant :
- des tuiles à emboîtement accessoires aval (4) d'un premier type, chaque tuile à emboîtement accessoire aval (4) comportant :
• une partie inférieure (4.1) qui est pourvue d'un bord de pied et qui est configurée pour prendre appui sur un bord de tête d'une tuile à emboîtement standard (2) appartenant à un rang immédiatement inférieur, ladite partie inférieure (4.1) étant pourvue d'au moins un galbe inférieur (8) dont la section transversale est en forme de U inversé et qui est configuré pour recouvrir partiellement le galbe longitudinal de la tuile à emboîtement standard (2) appartenant au rang immédiatement inférieur, et
• une partie supérieure (4.2) qui est pourvue d'un bord de tête et qui présente une hauteur maximale inférieure à 70% de la hauteur maximale du galbe inférieur (8) de chacune des tuiles à emboîtement accessoires aval (4),
- des tuiles à emboîtement accessoires aplanies (11) d'un deuxième type qui sont différentes des tuiles à emboîtement accessoires aval (4) et des tuiles à emboîtement standard (2), chaque tuile à emboîtement accessoire aplanie (11) présentant une hauteur maximale inférieure à 70% de la hauteur maximale du galbe inférieur (8) de chacune des tuiles à emboîtement accessoires aval (4), chaque tuile à emboîtement accessoire aplanie (11) comprenant un bord de pied configuré pour prendre appui sur un bord de tête d'une tuile à emboîtement accessoire aval (4) appartenant à un rang immédiatement inférieur et un bord de tête configuré pour être recouvert aussi bien par un bord de pied d'une tuile à emboîtement accessoire aplanie (11) que par un bord de pied d'une tuile à emboîtement standard (2) appartenant à un rang immédiatement supérieur,
- un rail de support inférieur (16) et un rail de support supérieur (17) configurés pour prendre appui respectivement sur des faces supérieures de deux liteaux (3) appartenant à deux rangs différents, et pour être fixés à la charpente,
- une pluralité d'organes de fixation (21) comprenant un premier ensemble d'organes de fixation (21) configurés pour être fixés au rail de support inférieur (16) et un deuxième ensemble d'organes de fixation (21) configurés pour être fixés au rail de support supérieur (17), chacun des organes de fixation (21) du premier ensemble étant configuré pour s'étendre entre une tuile à emboîtement accessoire aval (4) respective et une tuile à emboîtement accessoire aplanie (11) respective appartenant à deux rangs successifs et pour faire saille du bord de pied de la tuile à emboîtement accessoire aplanie (11) respective, et chacun des organes de fixation (21) du deuxième ensemble étant configuré pour s'étendre entre deux tuiles à emboîtement accessoires aplanies (11) respectives appartenant à deux rangs successifs et pour faire saille du bord de pied de la tuile à emboîtement accessoire aplanie (11) respective appartenant au rang supérieur desdits deux rangs successifs, et
- un dispositif de support (23) configuré pour être fixé aux organes de fixation (21) des premier et deuxième ensembles et pour être supporté par les organes de fixation (21) des premier et deuxième ensembles, le dispositif de support (23) étant configuré pour s'étendre au-dessus de tuiles à emboîtement accessoires aval et aplanies (4, 11) et pour supporter au moins un panneau photovoltaïque (31).

2. Système de fixation selon la revendication 1, dans lequel la partie supérieure (4.2) de chaque tuile à emboîtement accessoire aval (4) comporte un galbe supérieur (9) situé dans le prolongement supérieur du galbe inférieur (8) respectif et ayant une section transversale en forme de U inversé, ledit galbe supérieur (9) présentant une hauteur maximale inférieure à 70% de la hauteur maximale du galbe inférieur (8) de chacune des tuiles à emboîtement accessoires aval (4).

3. Système de fixation selon la revendication 2, dans lequel le galbe supérieur (9) prévu sur la partie supérieure (4.2) de chacune des tuiles à emboîtement accessoires aval (4) comporte une portion longitudinale centrale qui est sensiblement plane et deux portions longitudinales latérales disposées de part et d'autre de la portion longitudinale centrale respective.

4. Système de fixation selon la revendication 2 ou 3, dans lequel chaque tuile à emboîtement accessoire aplanie (11) comporte un galbe longitudinal (15) ayant une section transversale en forme de U inversé et configuré pour recouvrir partiellement le galbe supérieur (9) d'une tuile à emboîtement accessoire aval (4) appartenant au rang immédiatement inférieur ou le galbe longitudinal (15) d'une tuile à emboîtement accessoire aplanie (11) appartenant au rang immédiatement inférieur.

5. Système de fixation selon l'une quelconque des revendications 1 à 4, dans lequel chacun des organes de fixation (21) comporte une partie de fixation (21.1) configurée pour être fixée au rail de support inférieur (16) ou au rail de support supérieur (17), et une partie de support (21.2) qui est allongée, la partie de support (21.2) de chacun des organes de fixation (21) du premier ensemble est configurée pour s'étendre entre une tuile à emboîtement accessoire aval (4) respective et une tuile à emboîtement accessoire aplanie (11) respective appartenant à deux rangs successifs et pour faire saille du bord de pied de la tuile à emboîtement accessoire aplanie (11) respective, la partie de support (21.2) de chacun des organes de fixation (21) du deuxième ensemble est configurée pour s'étendre entre deux tuiles à emboîtement accessoires aplanies (11) respectives appartenant à deux rangs successifs et pour faire saille du bord de pied de la tuile à emboîtement accessoire aplanie (11) respective appartenant au rang supérieur desdits deux rangs successifs, le dispositif de support (23) étant configuré pour être fixé aux parties de support (21.2) des organes de fixation (21) des premier et deuxième ensembles et pour être supporté par lesdites parties de support (21.2) des organes de fixation (21) des premier et deuxième ensembles.

6. Système de fixation selon les revendications 2 et 5, dans lequel la partie de support (21.2) de chacun des organes de fixation (21) du premier ensemble est configurée pour être sensiblement alignée avec et s'étendre au-dessus d'un galbe supérieur (9) d'une tuile à emboîtement accessoire aval (4) appartenant au même rang que le liteau (3) sur lequel est destiné à être fixé le rail de support inférieur (16).

7. Système de fixation selon les revendication 2 et 5 ou la revendication 6, dans lequel la partie de support (21.2) de chacun des organes de fixation (21) du deuxième ensemble est configurée pour être sensiblement alignée avec et s'étendre au-dessus d'un galbe longitudinal (15) d'une tuile à emboîtement accessoire aplanie (11) appartenant au même rang que le liteau (3) sur lequel est destiné à être fixé le rail de support supérieur (17).

8. Système de fixation selon l'une quelconque des revendications 1 à 7, dans lequel chacun des rails de support inférieur et supérieur (16, 17) comporte une aile longitudinale inférieure (16.1, 17.1) et une aile longitudinale supérieure (16.2, 17.2), les ailes longitudinales inférieures (16.1, 17.1) des rails de support inférieur et supérieur (16, 17) étant configurées pour prendre appui respectivement sur des faces supérieures de deux liteaux (3) appartenant à deux rangs différents.

9. Système de fixation selon l'une quelconque des revendications 1 à 8, dans lequel le rail de support inférieur (16) comporte des orifices de fixation inférieurs (18) qui sont sensiblement alignés selon une direction d'alignement sensiblement parallèle à la direction d'extension du rail de support inférieur (16) et chacun des orifices de fixation inférieurs (18) étant apte à permettre la fixation d'un organe de fixation (21) respectif au rail de support inférieur (16), et le rail de support supérieur (17) comporte des orifices de fixation supérieurs (19) qui sont sensiblement alignés selon une direction d'alignement sensiblement parallèle à la direction d'extension du rail de support supérieur (17) et chacun des orifices de fixation supérieurs (19) étant apte à permettre la fixation d'un organe de fixation (21) respectif au rail de support supérieur (17).

10. Système de fixation selon les revendications 8 et 9, dans lequel les orifices de fixation inférieurs (18) sont prévus sur l'aile longitudinale supérieure (16.2) du rail de support inférieur (16), et les orifices de fixation supérieurs (19) sont prévus sur l'aile longitudinale supérieure (17.2) du rail de support supérieur (17).

11. Système de fixation selon la revendication 9 ou 10, dans lequel chacun des orifices de fixation inférieurs (18) est oblong et s'étend sensiblement parallèlement à la direction d'extension du rail de support inférieur (16), et chacun des orifices de fixation supérieurs (19) est oblong et s'étend sensiblement parallèlement à la direction d'extension du rail de support supérieur (17).

12. Système de fixation selon l'une quelconque des revendications 1 à 11, dans lequel le dispositif de support (23) comporte un organe de support inférieur (24) et un organe de support supérieur (25) qui sont allongés et qui sont sensiblement parallèles l'un à l'autre, les organes de support inférieur et supérieur (24, 25) étant configurées pour être fixés respectivement aux organes de fixation (21) du premier ensemble et aux organes de fixation (21) du deuxième ensemble, l'organe de support inférieur (24) comportant des trous de fixation inférieurs (27) qui sont sensiblement alignés selon une direction d'alignement sensiblement parallèle à la direction d'extension de l'organe de support inférieur (24) et chacun des trous de fixation inférieurs (27) étant apte à permettre la fixation d'un organe de fixation (21) respectif à l'organe de support inférieur (24), l'organe de support supérieur (25) comportant des trous de fixation supérieurs (28) qui sont sensiblement alignés selon une direction d'alignement sensiblement parallèle à la direction d'extension de l'organe de support supérieur (25) et chacun des trous de fixation supérieurs (28) étant apte à permettre la fixation d'un organe de fixation (21) respectif à l'organe de support supérieur (25).

13. Système de fixation selon l'une quelconque des revendications 1 à 12, dans lequel chacune des tuiles à emboîtement accessoires aval et aplanies (4, 11) présente une largeur sensiblement égale à la largeur des tuiles à emboîtement standard (2), et une longueur sensiblement égale à la longueur des tuiles à emboîtement standard (2).

## Patentansprüche

1. Befestigungssystem, das dazu ausgestaltet ist, mindestens ein Photovoltaikpaneel (31) auf einem Dach zu befestigen, das eine Vielzahl von Reihen von Standard-Falzziegeln (2) umfasst, wobei die Standard-Falzziegel (2) jeweils eine zum Himmel hin ausgerichtete Außenfläche und eine zu einem Dachstuhl hin ausgerichtete Innenfläche umfassen und auf Dachlattenreihen (3) des Dachstuhls verlegt werden, wobei die Standard-Falzziegel (2) jeweils mindestens eine Längswölbung umfassen, deren Querschnitt die Form eines umgekehrten U aufweist, wobei das Befestigungssystem Folgendes enthält:
- abwärts gelegene Zubehörfalzziegel (4) eines ersten Typs, wobei jeder abwärts gelegene Zubehörfalzziegel (4) Folgendes umfasst:
• einen unteren Teil (4.1), der mit einer Fußkante versehen und dazu ausgestaltet ist, auf einer Kopfkante eines Standard-Falzziegels (2), der zu einer unmittelbar darunter liegenden Reihe gehört, aufzuliegen, wobei der untere Teil (4.1) mit mindestens einer unteren Wölbung (8) versehen ist, deren Querschnitt die Form eines umgekehrten U aufweist und die dazu ausgestaltet ist, die Längswölbung des Standard-Falzziegels (2), der zu einer unmittelbar darunter liegenden Reihe gehört, teilweise abzudecken, und
• einen oberen Teil (4.2), der mit einer Kopfkante versehen ist und der eine maximale Höhe von weniger als 70 % der maximalen Höhe der unteren Wölbung (8) jedes der abwärts gelegenen Zubehörfalzziegel (4) aufweist,
- abgeflachte Zubehörfalzziegel (11) eines zweiten Typs, die sich von den abwärts gelegenen Zubehörfalzziegeln (4) und den Standard-Falzziegeln (2) unterscheiden, wobei jeder abgeflachte Zubehörfalzziegel (11) eine maximale Höhe von weniger als 70 % der maximalen Höhe der unteren Wölbung (8) jedes der abwärts gelegenen Zubehörfalzziegel (4), wobei jeder abgeflachte Zubehörfalzziegel (11) eine Fußkante enthält, die dazu ausgestaltet ist, auf einer Kopfkante eines abwärts gelegenen Zubehörfalzziegels (4), der zu einer unmittelbar darunter liegenden Reihe gehört, aufzuliegen, und eine Kopfkante, die dazu ausgestaltet ist, sowohl von einer Fußkante eines abgeflachten Zubehörfalzziegels (11) als auch von einer Fußkante eines Standard-Falzziegels (2), die zu einer unmittelbar darüber liegenden Reihe gehören, abgedeckt zu werden,
- eine untere Tragschiene (16) und eine obere Tragschiene (17), die dazu ausgestaltet sind, jeweils auf den oberen Flächen von zwei Dachlatten (3), die zu zwei unterschiedlichen Reihen gehören, aufzuliegen und am Dachstuhl befestigt zu werden,
- eine Vielzahl von Befestigungselementen (21), die eine erste Baugruppe von Befestigungselementen (21), die dazu ausgestaltet ist, an der unteren Tragschiene (16) befestigt zu werden, und eine zweite Baugruppe von Befestigungselementen (21) umfasst, die dazu ausgestaltet ist, an der oberen Tragschiene (17) befestigt zu werden, wobei jedes der Befestigungselemente (21) der ersten Baugruppe dazu ausgestaltet ist, sich zwischen einem jeweiligen abwärts gelegenen Zubehörfalzziegel (4) und einem jeweiligen abgeflachten Zubehörfalzziegel (11), die zu zwei aufeinanderfolgenden Reihen gehören, zu erstrecken und von der Fußkante des jeweiligen abgeflachten Zubehörfalzziegels (11) vorzustehen, und wobei jedes der Befestigungselemente (21) der zweiten Baugruppe dazu ausgestaltet ist, sich zwischen zwei jeweiligen abgeflachten Zubehörfalzziegeln (11), die zu zwei aufeinanderfolgenden Reihen gehören, zu erstrecken und von der Fußkante des jeweils abgeflachten Zubehörfalzziegels (11), der zu der oberen Reihe der beiden aufeinanderfolgenden Reihen gehört, vorzustehen, und
- eine Tragvorrichtung (23), die dazu ausgestaltet ist, an den Befestigungselementen (21) der ersten und der zweiten Baugruppe befestigt zu werden und von den Befestigungselementen (21) der ersten und der zweiten Baugruppe getragen zu werden, wobei die Tragvorrichtung (23) dazu ausgestaltet ist, sich über abwärts gelegene und abgeflachte Zubehörfalzziegel (4, 11) zu erstrecken und mindestens ein Photovoltaikpaneel (31) zu tragen.

2. Befestigungssystem nach Anspruch 1, wobei der obere Teil (4.2) jedes abwärts gelegenen Zubehörfalzziegels (4) eine obere Wölbung (9) umfasst, die sich in der oberen Verlängerung der jeweiligen unteren Wölbung (8) befindet und ein Querschnitt in der Form eines umgekehrten U aufweist, wobei die obere Wölbung (9) eine maximale Höhe von weniger als 70 % der maximalen Höhe der unteren Wölbung (8) jedes der abwärts gelegenen Zubehörfalzziegel (4) aufweist.

3. Befestigungssystem nach Anspruch 2, wobei die obere Wölbung (9), die am oberen Teil (4.2) jedes der abwärts gelegenen Zubehörfalzziegel (4) vorgesehen ist, einen mittigen Längsabschnitt, der im Wesentlichen flach ist, und zwei seitliche Längsabschnitte umfasst, die auf beiden Seiten des jeweiligen mittigen Längsabschnitts angeordnet sind.

4. Befestigungssystem nach Anspruch 2 oder 3, wobei jeder abgeflachte Zubehörfalzziegel (11) eine Längswölbung (15) umfasst, die einen Querschnitt in der Form eines umgekehrten U aufweist und dazu ausgestaltet ist, die obere Wölbung (9) eines abwärts gelegenen Zubehörfalzziegels (4), der zu einer unmittelbar darunter liegenden Reihe gehört, oder die Längswölbung (15) eines abgeflachten Zubehörfalzziegels (11), der zu der unmittelbar darunter liegenden Reihe gehört, teilweise abzudecken.

5. Befestigungssystem nach einem der Ansprüche 1 bis 4, wobei jedes der Befestigungselemente (21) einen Befestigungsteil (21.1), der dazu ausgestaltet ist, an der unteren Tragschiene (16) oder an der oberen Tragschiene (17) befestigt zu werden, und einen Tragteil (21.2) umfasst, der längliche ist, wobei der Tragteil (21.2) jedes der Befestigungselemente (21) der ersten Baugruppe dazu ausgestaltet ist, sich zwischen einem jeweiligen abwärts gelegenen Zubehörfalzziegel (4) und einem jeweiligen abgeflachten Zubehörfalzziegel (11), die zu zwei aufeinanderfolgenden Reihen gehören, zu erstrecken und von der Fußkante des jeweiligen abgeflachten Zubehörfalzziegels (11) vorzustehen, wobei der Tragteil (21.2) jedes der Befestigungselemente (21) der zweiten Baugruppe dazu ausgestaltet sind, sich zwischen zwei jeweiligen abgeflachten Zubehörfalzziegeln (11), die zu zwei aufeinanderfolgenden Reihen gehören, zu erstrecken und von der Fußkante des jeweils abgeflachten Zubehörfalzziegels (11), der zu der oberen Reihe der beiden aufeinanderfolgenden Reihen gehört, vorzustehen, wobei die Tragvorrichtung (23) dazu ausgestaltet ist, an den Tragteilen (21.2) der Befestigungselemente (21) der ersten und der zweiten Baugruppe befestigt zu werden und von den Tragteilen (21.2) der Befestigungselemente (21) der ersten und der zweiten Baugruppe getragen zu werden.

6. Befestigungssystem nach den Ansprüchen 2 und 5, wobei der Tragteil (21.2) jedes der Befestigungselemente (21) der ersten Baugruppe dazu ausgestaltet ist, im Wesentlichen mit einer oberen Wölbung (9) eines abwärts gelegenen Zubehörfalzziegels (4), der zu derselben Reihe gehört wie die Dachlatte (3), auf der die untere Tragschiene (16) befestigt werden soll, ausgerichtet zu werden und sich über diese zu erstrecken.

7. Befestigungssystem nach den Ansprüchen 2 und 5 oder Anspruch 6, wobei der Tragteil (21.2) jedes der Befestigungselemente (21) der zweiten Baugruppe dazu ausgestaltet ist, im Wesentlichen mit einer Längswölbung (15) eines abgeflachten Zubehörfalzziegels (11), der zu derselben Reihe gehört wie die Dachlatte (3), auf der die obere Tragschiene (17) befestigt werden soll, ausgerichtet zu werden und sich über diese zu erstrecken.

8. Befestigungssystem nach einem der Ansprüche 1 bis 7, wobei jede der unteren und der oberen Tragschiene (16, 17) einen unteren Längsschenkel (16.1, 17.1) und einen oberen Längsschenkel (16.2, 17.2) umfasst, wobei die unteren Längsschenkel (16.1, 17.1) der unteren und der oberen Tragschiene (16, 17) dazu ausgestaltet sind, jeweils auf den oberen Flächen von zwei Dachlatten (3), die zu zwei unterschiedlichen Reihen gehören, aufzuliegen.

9. Befestigungssystem nach einem der Ansprüche 1 bis 8, wobei die untere Tragschiene (16) untere Befestigungsöffnungen (18) umfasst, die im Wesentlichen in einer Ausrichtungsrichtung ausgerichtet sind, die im Wesentlichen parallel zur Erstreckungsrichtung der unteren Tragschiene (16) ist, und wobei jede der unteren Befestigungsöffnungen (18) dazu ausgelegt sind, die Befestigung eines jeweiligen Befestigungselements (21) an der unteren Tragschiene (16) zu ermöglichen, und die obere Tragschiene (17) obere Befestigungsöffnungen (19) umfasst, die im Wesentlichen in einer Ausrichtungsrichtung ausgerichtet sind, die im Wesentlichen parallel zur Erstreckungsrichtung der oberen Tragschiene (17) ist, und wobei jede der oberen Befestigungsöffnungen (19) dazu ausgelegt ist, die Befestigung eines jeweiligen Befestigungselements (21) an der oberen Tragschiene (17) zu ermöglichen.

10. Befestigungssystem nach den Ansprüchen 8 und 9, wobei die unteren Befestigungsöffnungen (18) am oberen Längsschenkel (16.2) der unteren Tragschiene (16) vorgesehen sind, und die oberen Befestigungsöffnungen (19) am oberen Längsschenkel (17.2) der oberen Tragschiene (17) vorgesehen sind.

11. Befestigungssystem nach Anspruch 9 oder 10, wobei jede der unteren Befestigungsöffnungen (18) langgestreckt ist und sich im Wesentlichen parallel zur Erstreckungsrichtung der unteren Tragschiene (16) erstreckt, und jede der oberen Befestigungsöffnungen (19) langgestreckt ist und sich im Wesentlichen parallel zur Erstreckungsrichtung der oberen Tragschiene (17) erstreckt.

12. Befestigungssystem nach einem der Ansprüche 1 bis 11, wobei die Tragvorrichtung (23) ein unteres Tragelement (24) und ein oberes Tragelement (25) umfasst, die länglich und im Wesentlichen parallel zueinander sind, wobei das untere und das obere Tragelement (24, 25) dazu ausgestaltet sind, jeweils an den Befestigungselementen (21) der ersten Baugruppe und an den Befestigungselementen (21) der zweiten Baugruppe befestigt zu werden, wobei das untere Tragelement (24) untere Befestigungslöcher (27) umfasst, die im Wesentlichen in einer Ausrichtungsrichtung ausgerichtet sind, die im Wesentlichen parallel zur Erstreckungsrichtung des unteren Tragelements (24) ist, und wobei jedes der unteren Befestigungslöcher (27) dazu ausgelegt ist, die Befestigung eines jeweiligen Befestigungselements (21) am unteren Tragelement (24) zu ermöglichen, wobei das obere Tragelement (25) obere Befestigungslöcher (28) umfasst, die im Wesentlichen in einer Ausrichtungsrichtung ausgerichtet sind, die im Wesentlichen parallel zur Erstreckungsrichtung des oberen Tragelements (25) ist, und wobei jedes der oberen Befestigungslöcher (28) dazu ausgelegt ist, die Befestigung eines jeweiligen Befestigungselements (21) am oberen Tragelement (25) zu ermöglichen.

13. Befestigungssystem nach einem der Ansprüche 1 bis 12, wobei jeder der abwärts gelegenen und abgeflachten Zubehörfalzziegel (4, 11) eine Breite, die im Wesentlichen gleich der Breite der Standard-Falzziegel (2) ist, und eine Länge aufweist, die im Wesentlichen gleich der Länge der Standard-Falzziegel (2) ist.

## Claims

1. A fastening system configured to fasten at least one photovoltaic panel (31) to a roof including a plurality of rows of standard interlocking tiles (2), the standard interlocking tiles (2) each including an external face facing the sky and an internal face facing a framework and being laid on rows of battens (3) of the framework, the standard interlocking tiles (2) each including at least one longitudinal curve whose cross-section is in the shape of an inverted U, the fastening system comprising:
- downstream accessory interlocking tiles (4) of a first type, each downstream accessory interlocking tile (4) including:
• a lower part (4.1) which is provided with a foot edge and which is configured to bear on a head edge of a standard interlocking tile (2) belonging to an immediately lower row, said lower part (4.1) being provided with at least one lower curve (8) whose cross-section is in the shape of an inverted U and which is configured to partially cover the longitudinal curve of the standard interlocking tile (2) belonging to the immediately lower row, and
• an upper part (4.2) which is provided with a head edge and which has a maximum height less than 70% of the maximum height of the lower curve (8) of each of the downstream accessory interlocking tiles (4),
- flattened accessory interlocking tiles (11) of a second type which are different from the downstream accessory interlocking tiles (4) and the standard interlocking tiles (2), each flattened accessory interlocking tile (11) having a maximum height less than 70% of the maximum height of the lower curve (8) of each of the downstream accessory interlocking tiles (4), each flattened accessory interlocking tile (11) comprising a foot edge configured to bear on a head edge of a downstream accessory interlocking tile (4) belonging to an immediately lower row and a head edge configured to be covered both by a foot edge of a flattened accessory interlocking tile (11) and by a foot edge of a standard interlocking tile (2) belonging to an immediately upper row,
- a lower support rail (16) and an upper support rail (17) configured to bear respectively on upper faces of two battens (3) belonging to two different rows, and to be fasten to the framework,
- a plurality of fastening members (21) comprising a first set of fastening members (21) configured to be fasten to the lower support rail (16) and a second set of fastening members (21) configured to be fasten to the upper support rail (17), each of the fastening members (21) of the first set being configured to extend between a respective downstream accessory interlocking tile (4) and a respective flattened accessory interlocking tile (11) belonging to two successive rows and to project from the foot edge of the respective flattened accessory interlocking tile (11), and each of the fastening members (21) of the second set being configured to extend between two respective flattened accessory interlocking tiles (11) belonging to two successive rows and to project from the foot edge of the respective flattened accessory interlocking tile (11) belonging to the upper row of said two successive rows, and
- a support device (23) configured to be fasten to the fastening members (21) of the first and second sets and to be supported by the fastening members (21) of the first and second sets, the support device (23) being configured to extend above downstream and flattened accessory interlocking tiles (4, 11) and to support at least one photovoltaic panel (31).

2. The fastening system according to claim 1, wherein the upper part (4.2) of each downstream accessory interlocking tile (4) includes an upper curve (9) located in the upper extension of the respective lower curve (8) and having a cross-section in the shape of an inverted U, said upper curve (9) having a maximum height less than 70% of the maximum height of the lower curve (8) of each of the downstream accessory interlocking tiles (4).

3. The fastening system according to claim 2, wherein the upper curve (9) provided on the upper part (4.2) of each of the downstream accessory interlocking tiles (4) includes a central longitudinal portion which is substantially flat and two lateral longitudinal portions disposed on either side of the respective central longitudinal portion.

4. The fastening system according to claim 2 or 3, wherein each flattened accessory interlocking tile (11) includes a longitudinal curve (15) having a cross-section in the shape of an inverted U and configured to partially cover the upper curve (9) of a downstream accessory interlocking tile (4) belonging to the immediately lower row or the longitudinal curve (15) of a flattened accessory interlocking tile (11) belonging to the immediately lower row.

5. The fastening system according to any one of claims 1 to 4, wherein each of the fastening members (21) includes a fastening part (21.1) configured to be fastened to the lower support rail (16) or to the upper support rail (17), and a support part (21.2) which is elongate, the support part (21.2) of each of the fastening members (21) of the first set is configured to extend between a respective downstream accessory interlocking tile (4) and a respective flattened accessory interlocking tile (11) belonging to two successive rows and to project from the foot edge of the respective flattened accessory interlocking tile (11), the support part (21.2) of each of the fastening members (21) of the second set is configured to extend between two respective flattened accessory interlocking tiles (11) belonging to two successive rows and to project from the foot edge of the respective flattened accessory interlocking tile (11) belonging to the upper row of said two successive rows, the support device (23) being configured to be fasten to the support parts (21.2) of the fastening members (21) of the first and second sets and to be supported by said support parts (21.2) of the fastening members (21) of the first and second sets.

6. The fastening system according to claims 2 and 5, wherein the support part (21.2) of each of the fastening members (21) of the first set is configured to be substantially aligned with and extend above an upper curve (9) of a downstream accessory interlocking tile (4) belonging to the same row as the batten (3) on which the lower support rail (16) is intended to be fasten.

7. The fastening system according to claim 2 and 5 or claim 6, wherein the support part (21.2) of each of the fastening members (21) of the second set is configured to be substantially aligned with and extend above a longitudinal curve (15) of a flattened accessory interlocking tile (11) belonging to the same row as the batten (3) on which the upper support rail (17) is intended to be fasten.

8. The fastening system according to any one of claims 1 to 7, wherein each of the lower and upper support rails (16, 17) includes a lower longitudinal wing (16.1, 17.1) and an upper longitudinal wing (16.2, 17.2), the lower longitudinal wings (16.1, 17.1) of the lower and upper support rails (16, 17) being configured to bear respectively on upper faces of two battens (3) belonging to two different rows.

9. The fastening system according to any one of claims 1 to 8, wherein the lower support rail (16) includes lower fastening holes (18) which are substantially aligned in an alignment direction substantially parallel to the extension direction of the lower support rail (16) and each of the lower fastening holes (18) being able to allow the fastening of a respective fastening member (21) to the lower support rail (16), and the upper support rail (17) includes upper fastening holes (19) which are substantially aligned in an alignment direction substantially parallel to the extension direction of the upper support rail (17) and each of the upper fastening holes (19) being able to allow the fastening of a respective fastening member (21) to the upper support rail (17).

10. The fastening system according to claims 8 and 9, wherein the lower fastening holes (18) are provided on the upper longitudinal wing (16.2) of the lower support rail (16), and the upper fastening holes (19) are provided on the upper longitudinal wing (17.2) of the upper support rail (17).

11. The fastening system according to claim 9 or 10, wherein each of the lower fastening holes (18) is oblong and extends substantially parallel to the extension direction of the lower support rail (16), and each of the upper fastening holes (19) is oblong and extends substantially parallel to the extension direction of the upper support rail (17).

12. The fastening system according to any one of claims 1 to 11, wherein the support device (23) includes a lower support member (24) and an upper support member (25) which are elongate and which are substantially parallel to each other, the lower and upper support members (24, 25) being configured to be fasten respectively to the fastening members (21) of the first set and to the fastening members (21) of the second set, the lower support member (24) including lower fastening holes (27) which are substantially aligned in an alignment direction substantially parallel to the extension direction of the lower support member (24) and each of the lower fastening holes (27) being able to allow the fastening of a respective fastening member (21) to the lower support member (24), the upper support member (25) including upper fastening holes (28) which are substantially aligned in an alignment direction substantially parallel to the extension direction of the upper support member (25) and each of the upper fastening holes (28) being able to allow the fastening of a respective fastening member (21) to the upper support member (25).

13. The fastening system according to any one of claims 1 to 12, wherein each of the downstream and flattened accessory interlocking tiles (4, 11) has a width substantially equal to the width of the standard interlocking tiles (2), and a length substantially equal to the length of the standard interlocking tiles (2).
